# EUROPEAN PATENT SPECIFICATION

(11) **EP 2 523 092 B1**
(45) Date of publication and mention of the grant of the patent: **04.04.2018**
(21) Application number: 12166770.3
(22) Date of filing: 04.05.2012
(51) Int. Cl.: G06F 3/12

(54) **Control apparatus, control method, and control system**
Steuervorrichtung, Steuerverfahren und Steuersystem
Appareil de commande, procédé de commande et système de commande

(30) Priority: 10.05.2011 JP 2011105529
(43) Date of publication of application: 14.11.2012
(73) Proprietor: Ricoh Company, Ltd., Tokyo 143-8555 (JP)
(72) Inventor: Hakozaki, Hironori, Tokyo 143-8555 (JP)
(74) Representative: Schwabe - Sandmair - Marx

(56) References cited:
- EP-A2- 0 974 892
- US-A1- 2005 068 564
- US-A1- 2009 190 166
- US-A1- 2010 157 363

## Description

### FIELD OF THE INVENTION

The present invention relates to techniques of printing an accumulated job.

### BACKGROUND OF THE INVENTION

For example, Patent document 1 discloses a technique of obtaining an accumulated job (printing data) held by a print server and executing (printing) the job with the printer.

In recent years, there are cases in which such a printing control system is utilized in a wide-area environment. For example, such cases include a case of implementing a system at a customer, etc., which are deploying businesses globally. In the above-mentioned case, multiple of the print servers are installed in offices in different countries and in different locations, so that a large-scale system is constructed. Even in such an environment, a user desires a location-free environment in which an own accumulated job may be executed from anywhere, independent of where the print server or the printer is installed.

However, in related-art printing control, for the large-scale system with multiple of the print servers, when the user executes a job, it is necessary to grasp which of the print servers a job to be executed is accumulated in.

For example, in a related-art method, job listing information from which the user can select a job to be executed is provided. An image processing apparatus obtains and displays, on a job listing screen, bibliographic information on the accumulated job of the user from the print server set to default.

In response thereto, if the displayed job listing information does not include bibliographic information on the job to be executed, the user instructs the image processing apparatus to switch where the bibliographic information is to be obtained from, to a different print server and causes new job listing information to be displayed.

Therefore, if the user does not grasp which print server the job to be executed is accumulated in, the user, in the image processing apparatus, repeats an operation of the above-described instruction to switch the print server and finds the job to be executed from the job listing information redisplayed. Such an operation is troublesome for the user.

In this way, the related-art printing control, for the large scale system with multiple of the print servers, leads to providing an inconvenient printing service to the user.

### Patent document

Patent Document 1 JP2009-294889A US 2005/068564 A1 pertains to a method according to the preamble of claim 1.

The present invention is defined by the subject matter of the appended claims In light of the problems of the related art as described above, an object of the invention is to provide a control apparatus, a control method, and a control system that make it possible to realize a highly convenient printing service in a system having multiple job accumulating locations.

In order to achieve the object as described above, a control apparatus (100) according to the present invention is provided, including a job holding unit which accumulates and holds a job in a predetermined storage area, the control apparatus being connected, via a predetermined data transmission path, with a processing apparatus (200) which executes the job held by the job holding unit, the control apparatus including a request accepting unit (14) which accepts a processing request from the processing apparatus; a response data generating unit (16) which generates response data to the processing request based on results of processing executed in response to the processing request; and a request responding unit (15) which transmits the response data to the processing apparatus and responds to the accepted processing request. Upon the request accepting unit accepting a job listing obtaining request from the processing apparatus, the response data generating unit obtains bibliographic information corresponding to a job of a user from a bibliographic information holding unit which holds multiple bibliographic information sets in order to unilaterally manage the multiple bibliographic information sets corresponding to all jobs including the job held by the control apparatus and jobs held by other control apparatuses; and, based on the obtained bibliographic information, generates job listing response data which include job accumulating location specifying information for specifying job accumulating location. Then the request responding unit transmits the generated job listing response data to the processing apparatus and responds to the job listing obtaining request.

In order to achieve the object as described above, a control system (1) according to the present invention is provided, in which a control apparatus (100) including a job holding unit which accumulates and holds a job in a predetermined storage area is connected, via a predetermined data transmission path, with a processing apparatus (200) which executes the job held by the job holding unit, the control apparatus including a request accepting unit (14) which accepts a processing request from the processing apparatus; a response data generating unit (16) which generates response data to the processing request based on results of processing executed in response to the processing request; and a request responding unit (15) which transmits the response data to the processing apparatus and responds to the accepted processing request. The processing apparatus includes a requesting unit which requests a predetermined processing to the control apparatus; and a response accepting unit which accepts a response to the processing request from the control apparatus. In the processing apparatus, the requesting unit makes a job listing obtaining request, and in the control apparatus, upon the request accepting unit accepting a job listing obtaining request from the processing apparatus, the response data generating unit obtains bibliographic information corresponding to a job of a user from a bibliographic information holding unit which holds multiple bibliographic information sets in order to unilaterally manage the multiple bibliographic information sets corresponding to all jobs including the job held by the control apparatus and jobs held by other control apparatuses, and; based on the obtained bibliographic information, generates job listing response data which include job accumulating location specifying information for specifying job accumulating location. Then the request responding unit transmits the generated job listing response data to the processing apparatus and responds to the job listing obtaining request; and, in the processing apparatus, upon the response accepting unit accepting a response to the job listing obtaining request from the control apparatus, the job listing screen of a user is displayed based on the job listing response data received when the response is accepted.

According to the present invention, a control apparatus, a control method, and a control system may be provided that make it possible to implement a highly convenient printing service in a system having multiple locations in which a job is accumulated.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 is a diagram illustrating an exemplary configuration of a printing control system according to a first embodiment of the present invention;
FIG. 2 is a diagram illustrating an exemplary hardware configuration of a printing control apparatus according to the first embodiment of the present invention;
FIG. 3 is a diagram illustrating an exemplary hardware configuration of an image processing apparatus according to the first embodiment of the present invention;
FIG. 4 is a diagram illustrating an exemplary operation of a related-art printing control system;
FIG. 5 is a diagram illustrating an exemplary operation of the printing control system according to the first embodiment of the present invention;
FIGS. 6A and 6B are diagrams illustrating an exemplary functional configuration of printing control according to the first embodiment of the present invention;
FIG. 7 is a diagram illustrating exemplary data of printing data management information according to the first embodiment of the present invention;
FIG. 8 is a diagram illustrating exemplary data of bibliographic management information according to the first embodiment of the present invention;
FIGS. 9A and 9B are flowcharts illustrating an exemplary processing procedure for job accumulation according to the first embodiment of the present invention;
FIGS. 10A and 10B are flowcharts illustrating an exemplary processing procedure for job listing displaying according to the first embodiment of the present invention;
FIG. 11 is a diagram illustrating exemplary data for response data according to the first embodiment of the present invention;
FIG. 12 is a flowchart illustrating an exemplary processing procedure for job execution according to the first embodiment of the present invention;
FIGS. 13A and 13B are diagrams illustrating an exemplary functional configuration of printing control according to a second embodiment of the present invention;
FIG. 14 is a flowchart illustrating an exemplary processing procedure for job listing provision according to the second embodiment of the present invention;
FIG. 15 is a diagram illustrating an exemplary setting screen of a job listing according to Variation 1 of the present invention;
FIG. 16 is a flowchart illustrating the exemplary processing procedure for the job listing provision according to the Variation 1 of the present invention;
FIG. 17 is a flowchart illustrating the exemplary processing procedure for the job listing displaying according to Variation 2 of the present invention;
FIGS. 18A, 18B, and 18C are diagrams illustrating the exemplary screen transition for the job listing displaying according to the Variation 2 of the present invention;
FIG. 19 is a diagram illustrating an exemplary operation of a printing control system which adopts a clustering technique;
FIG. 20 is a flowchart illustrating the exemplary processing procedure for the job accumulation according to Variation 3 of the present invention;
FIGS. 21A and 21B are flowcharts illustrating the exemplary processing procedure for job deletion according to Variation 4 of the present invention; and
FIGS. 22A and 22B are diagrams illustrating an exemplary configuration of the printing control system according to Variation 5 of the present invention.

### DETAILED DESCRIPTION OF THE PRESENT INVENTION

Below, preferred embodiments (below called "embodiments") of the present invention are described in detail using the drawings.

### First embodiment

### System configuration

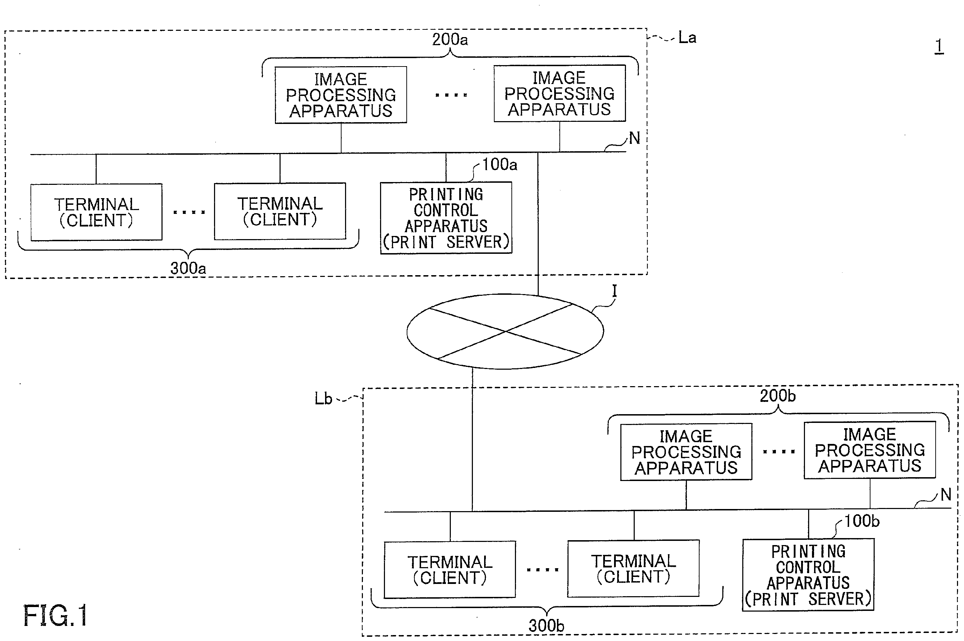

FIG. 1 is a diagram showing an exemplary configuration of a printing control system 1 according to the present embodiment.

FIG. 1 shows an exemplary system configuration in which multiple terminals 300a, 300b (below called "terminal 300" as a whole); multiple image processing apparatuses 200a, 200b (below called "image processing apparatus 200" as a whole); and multiple printing control apparatuses 100a and 100b are connected via a predetermined data transmission path.

The terminal 300 is an equipment unit which has a job transmission function. The terminal 300, which is a PC (personal computer), a PDA (personal digital assistant), etc., transmits, to the printing control apparatus 100, job data in which various execution settings are made via applications such as a printer driver and a Web browser.

The printing control apparatus 100, which is an equipment unit having a printing control function for an accumulated job, corresponds to a print server. The printing control apparatus 100, which is a PC, etc., for example, stores and accumulates data received from the terminal 300 in a predetermined storage area, and, based on various management information sets, manages the job data and transmits the job data and a job listing of a user to the image processing apparatus 200.

The image processing apparatus 200 is an equipment unit which has image processing functions. The image processing apparatus 200 is an LP (laser printer), an MFP (multi-function peripheral), etc., for example. For the MFP, the image processing functions include a copying function, a scanning function, a printing function, etc. Based on a specification of a job to be executed, for example, the image processing apparatus 200 receives pertinent data from the printing control apparatus 100 and performs printing with the printing function.

Moreover, FIG. 1 shows areas La and Lb (below generically called "area L") of two internal networks Na and Nb (below called "internal network N") such as a LAN (local area network). For example, these areas La and Lb refer to a network environment which is constructed indoors or in an office in which systems are to be implemented, for example. Thus, the above-described respective equipment units (the "terminal", the "image processing apparatus", and the "printing control apparatus") are connected to the internal networks Na and Nb.

Moreover, in FIG. 1 is shown an external network 1 to which the above-described two internal networks Na and Nb are connected via a firewall (not shown). In this way, FIG. 1 shows an example of a large-scale system for use in a wide-area environment.

The printing control system 1 provides the following services with the equipment units and the network environment. For example, the user transmits, from the terminal 300a installed in the area La to the printing control apparatus 100a, job data in which various printing conditions are set and accumulates the job data.

Next, in the image processing apparatus 200b, which is installed in the area Lb the user proceeds to, the user inputs user information (for example, "a user ID") and obtains listing information on an own accumulated job which is accumulated in multiple printing control apparatuses 100a, 100b, which are installed in the system 1. Next, in the image processing apparatus 200b, the user selects a job to be executed from the listing information and instructs that the job be executed.

As a result, based on the instruction to execute, the image processing apparatus 200b obtains pertinent job data from the printing control apparatus 100a which accumulates the selected job to be executed and executes the job. In other words, in the printing control system 1 according to the present embodiment, the job accumulated within the area La may be executed in the area Lb.

As described above, the printing control system 1 according to the present embodiment may provide an environment (a location-free environment) in which an own accumulated job may be executed from anywhere independent of where the printing control apparatus 100 and the image processing apparatus 200 are installed.

### Hardware configuration

Here, a hardware configuration is described for the above-described printing control apparatus 100, the image processing apparatus 200, and the terminal 300. As the printing control apparatus 100 and the terminal 300 are generally identical apparatuses, the printing control apparatus 100 is explained, while an explanation of the terminal 300 is omitted.

### Printing control apparatus

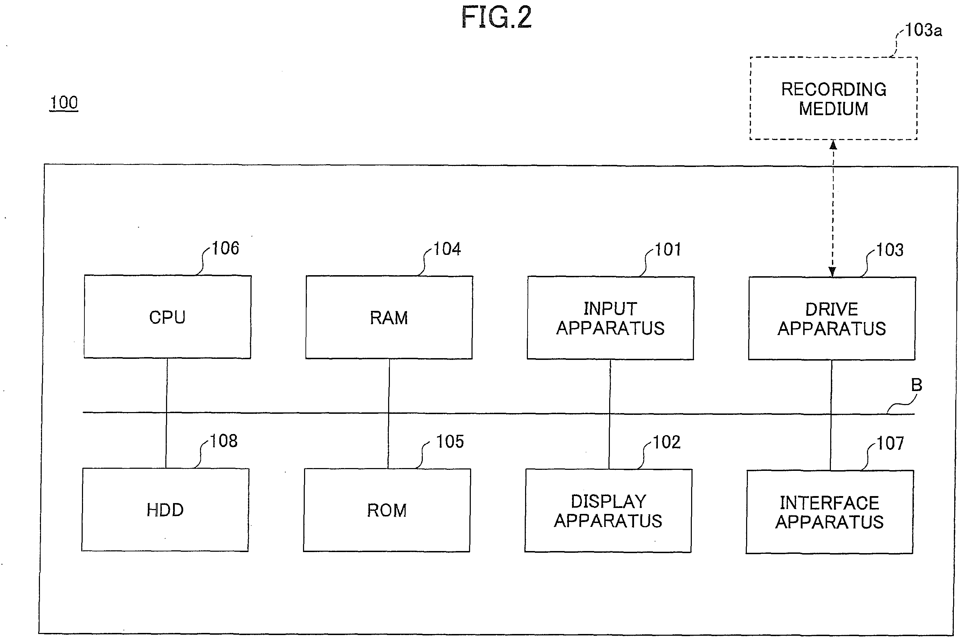

FIG. 2 is a diagram showing an exemplary hardware configuration of the printing control system 100 according to the present embodiment.

As shown in FIG. 2, the printing control apparatus 100 includes an input apparatus 101, a display apparatus 102, a drive apparatus 103, a RAM (random access memory) 104, a ROM (read only memory) 105, a CPU (central processing unit) 106, an interface apparatus 107, a HDD (hard disk drive) 108, etc., which are mutually connected via a bus B.

The input apparatus 101, which includes a keyboard, a mouse, etc., is used to input operating signals to the printing control apparatus 100. The display apparatus 102, which includes a display, etc., displays results of processing by the printing control apparatus 100.

The interface apparatus 107 is an interface which connects the printing control apparatus 100 to the predetermined data transmission path. In this way, the printing control apparatus 100 may conduct data communications with the terminal 300 and the image processing apparatus 200 via the interface apparatus 107.

The HDD 108 is a non-volatile storage apparatus which stores thereon programs and data. The stored programs and data include an OS (operating system), which is basic software ("Windows (trademark or registered trademark)", "UNIX (trademark or registered trademark)", etc., for example) for an information processing system which controls the whole apparatus; an application which provides various functions (e.g., "a printing control function") on the system 1, etc.

Moreover, the HDD 108 manages the stored programs and data with a predetermined file system and/or a DB (database). Received data (job data) from the terminal 300, which are stored and accumulated in a predetermined storage area of the HDD 108, are managed with the DB.

The drive apparatus 103 is an interface with a recording medium 103a which is detachably mounted. In this way, the printing control apparatus 100 may read from and/or write to the recording medium 103a via the drive apparatus 103. The recording medium 103a includes, for example, a floppy (trademark or registered trademark) disk, a CD (compact disk), and a DVD (digital versatile disk), and an SD memory card, a USB (universal serial bus) memory, etc.

The ROM 105 is a non-volatile semiconductor memory (storage apparatus) which may hold internal data even when power is turned off. In the ROM 105 is stored data and programs such as network setting, information processing system setting, BIOS (basic input/output system), which is executed at the time of launching the printing control apparatus 100, etc.

The RAM 104 is a volatile semiconductor memory (storage apparatus) which temporarily holds data and programs. The CPU 106 is an operating apparatus which reads the data and the programs in the RAM from the above-described storage apparatuses (such as the "HDD", the "ROM", etc.) and executes the process to implement control and installed functions of the whole apparatus.

As described above, the printing control apparatus 100 according to the present embodiment may provide a printing control service with the above-described hardware configuration.

### Image processing apparatus

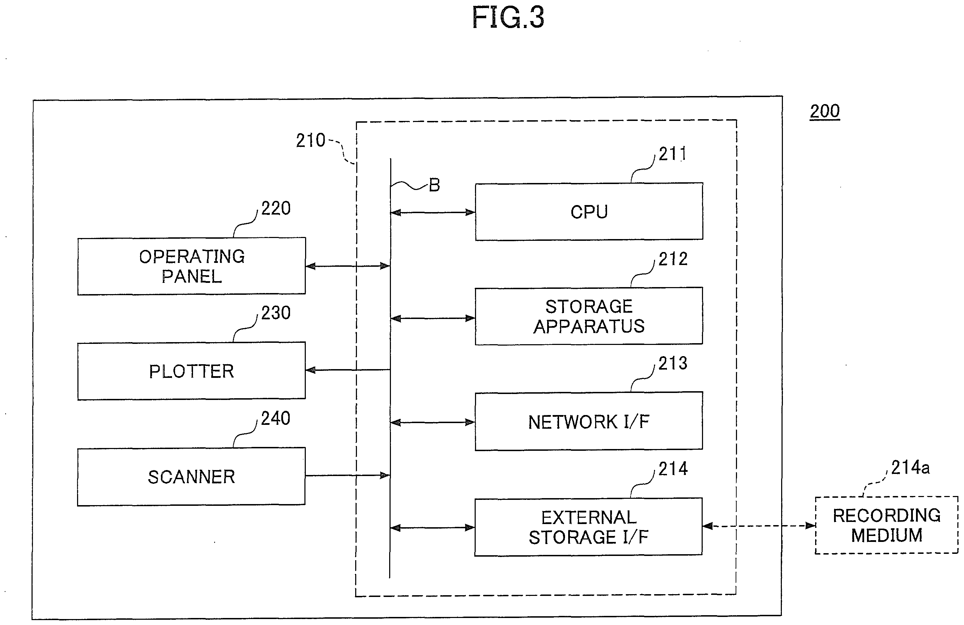

FIG. 3 is a diagram showing an exemplary hardware configuration of the image processing apparatus 200 according to the present embodiment.

As shown in FIG. 3, the image processing apparatus 200 includes a controller 210, an operating panel 220, a plotter 230, a scanner 240, etc., which are mutually connected by a bus B.

The operating panel 220, which includes a display unit and an input unit, provides various information sets such as equipment information, etc., to a user and accepts various user operations such as an operation setting, an operating instruction, etc. The job listing obtained from the printing control apparatus 100 is displayed on the display unit of the operating panel 220 and a job executing instruction from the user is accepted by the input unit such as a predetermined GUI (graphical user interface).

The plotter 230, which includes an image forming unit, forms an output image on a sheet. Methods of forming the output image include an electro-photographic process, an inkjet method, etc., for example. The scanner 240 optically reads a manuscript and generates a read image.

The controller 210 includes a CPU 211, a storage apparatus 212, a network I/F 213, an external storage I/F 214, etc., which are mutually connected to the bus B.

The CPU 211, which is an operating apparatus, controls the whole apparatus by executing programs. Moreover, the storage apparatus 212 stores and holds the above-described programs and various data sets ("image data", for example).

The storage apparatus 212 includes, for example, a RAM, which is a volatile memory; a ROM, which is a non-volatile memory; and an HDD, which includes a large-capacity storage area. The RAM functions as a work area (a storage area to which data and programs are temporarily read) of the CPU 211. The ROM and the HDD are used as storage locations for the various data sets and the programs. In this way, in the image processing apparatus 200, the CPU 211 reads the programs stored in the ROM into the RAM (memory) and executes the programs.

The network I/F 213 is an interface for connecting the image processing apparatus 200 to the predetermined data transmission path. In this way, the image processing apparatus 200 may conduct data communications with the printing control apparatus 100 and the image processing apparatus 200 via the network I/F 213.

The external storage I/F 214 is an interface for connecting a recording medium 214a, which corresponds to an external storage apparatus. In this way, the image processing apparatus 200 may read from and/or write to the recording medium 214a via the external storage I/F 214. The storage medium 214a includes an SD memory card, a USB memory, etc., for example.

As described above, the image processing apparatus 200 according to the present embodiment may provide an image processing service with the above-described hardware configuration.

### Printing control function

A printing control function according to the present embodiment is described.

When a request for obtaining a job listing that is from the image processing apparatus 200 is accepted, the printing control apparatus 100 according to the present embodiment obtains bibliographic information on an accumulated job of a user from an information management location which unilaterally manages multiple bibliography information sets which correspond to all accumulated jobs within the system 1. Based on the bibliographical information obtained, the printing control apparatus 100 generates job listing information of the user that includes job accumulating location specifying information for specifying a job accumulating location. The printing control apparatus 100 responds, to the request-originating image processing apparatus 200, with the generated job listing information. Moreover, when a request for obtaining a job that is from the image processing apparatus 200 is accepted, the printing control apparatus 100 obtains a pertinent job from accumulated jobs held by an own apparatus. The printing control apparatus 100 responds, to the request-originating image processing apparatus 200, with the obtained job. The printing control apparatus 100 according to the present embodiment has such a printing control function.

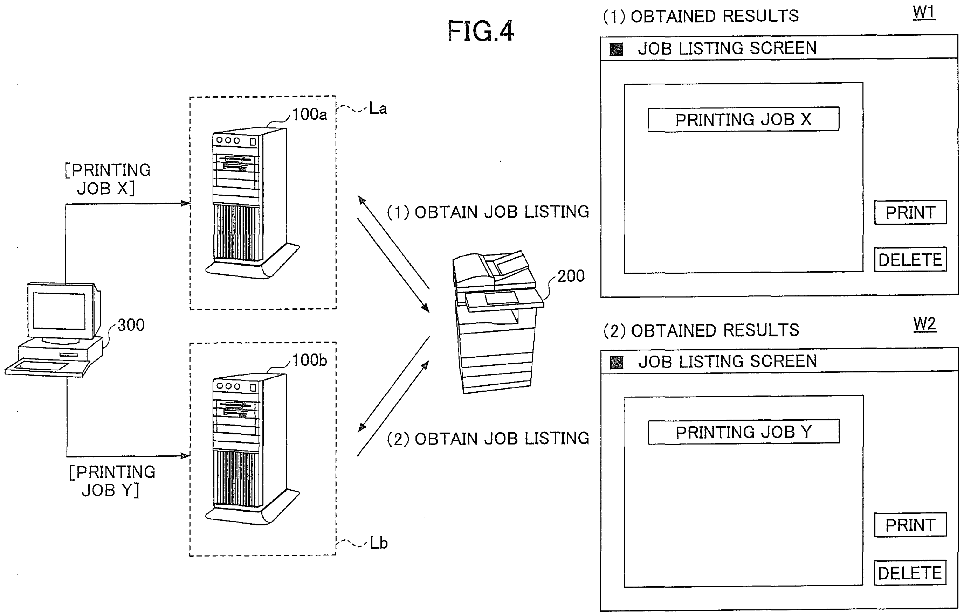

In related-art printing control, there is a problem as shown in FIG. 4, for example.

FIG. 4 is a diagram illustrating an exemplary operation of a related-art printing control system. FIG. 4 shows an example in which two jobs are stored by the same user via the terminal 300 in the printing control apparatuses 100a and 100b installed in two different areas La, Lb. Moreover, in the image processing apparatus 200, the printing control apparatus 100a is set as default as a location for obtaining the job listing information.

In the related art, in the image processing apparatus 200, first, (1) listing information on accumulated jobs of the user is obtained from the printing control apparatus 100a, which is set as default, and a job listing screen W1 of the printing control apparatus 100a is displayed. Thus, job listing information including a printing job X as an accumulated job of the user is displayed on the screen W1.

Here, when the user wishes to execute the printing job Y, the job to be executed is not displayed on the displayed job listing screen W1. Thus, the user instructs the image processing apparatus 200 to switch a location for obtaining the job listing information to the printing control apparatus 100b.

As a result, in the image processing apparatus 200, (2) listing information on the accumulated job of the user is obtained from the switched printing control apparatus 100b, and a job listing screen W2 of the printing control apparatus 100b is displayed In this way, the user may find a job to be executed.

In this way, in the related art method, if the user does not grasp which printing control apparatus 100 the job to be executed is accumulated in, the operation of the above-described accumulating location switching instruction is to be repeated until the job to be executed is found. Such an operation is troublesome for the user.

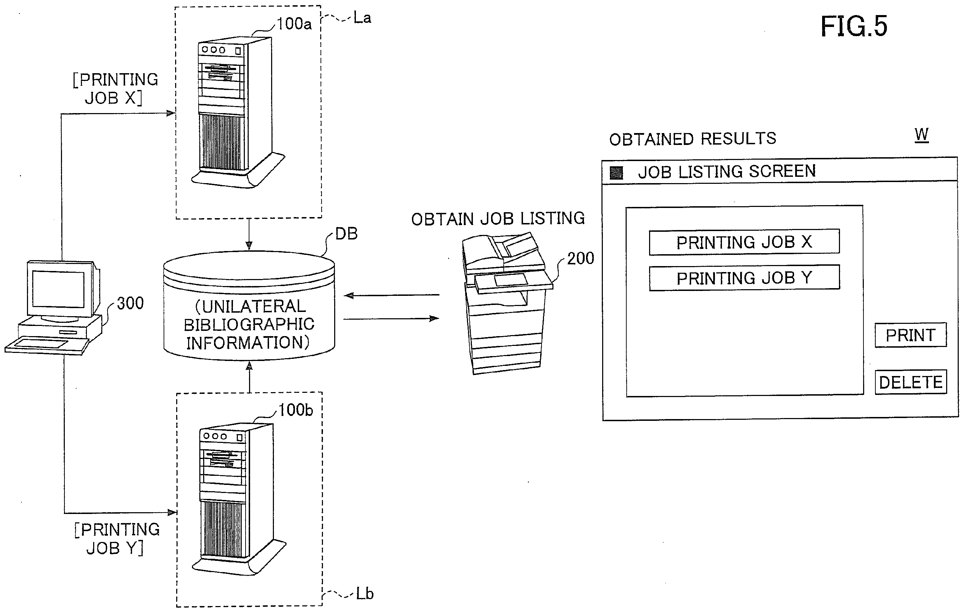

Thus, the printing control apparatus 100 according to the present embodiment is arranged as shown in FIG. 5.

FIG. 5 is a diagram showing an exemplary operation of the printing control system 1 according to the present embodiment.

In the printing control apparatus 100 according to the present embodiment, multiple bibliographic information sets on the accumulated jobs of the user are obtained from an information management location DB which unilaterally manages multiple bibliographic information sets corresponding to all accumulated jobs within the system 1, and provides job listing information including job accumulating location specifying information to the image processing apparatus 200.

In this way, in the image processing apparatus 200, the job listing screen W of all accumulated jobs of the user within the system 1 is displayed, providing an operating environment in which a job to be executed can be selected without an operation of switching the accumulating location. Moreover, in the image processing apparatus 200, a pertinent job is obtained from a printing control apparatus 100 which stores the selected job using information for specifying a location for accumulating the selected job, providing a job executing environment which makes it unnecessary to grasp the location for accumulating the job to be executed.

In this way, in the present embodiment, in order to find a job to execute, the user may simply and conveniently execute the job without performing the operation of switching the location to accumulate the job or grasping the location to accumulate the job. In this way, the present embodiment makes it possible to realize a highly convenient printing service in a system 1 having multiple locations to accumulate the job.

Below, a configuration of the printing control function and an operation thereof according to the present embodiment are described.

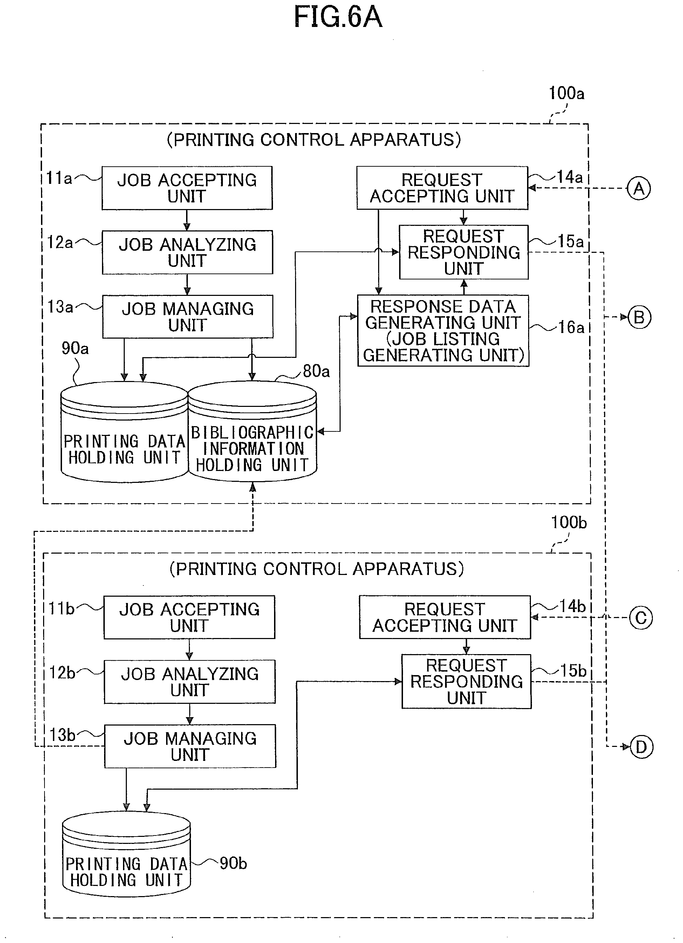

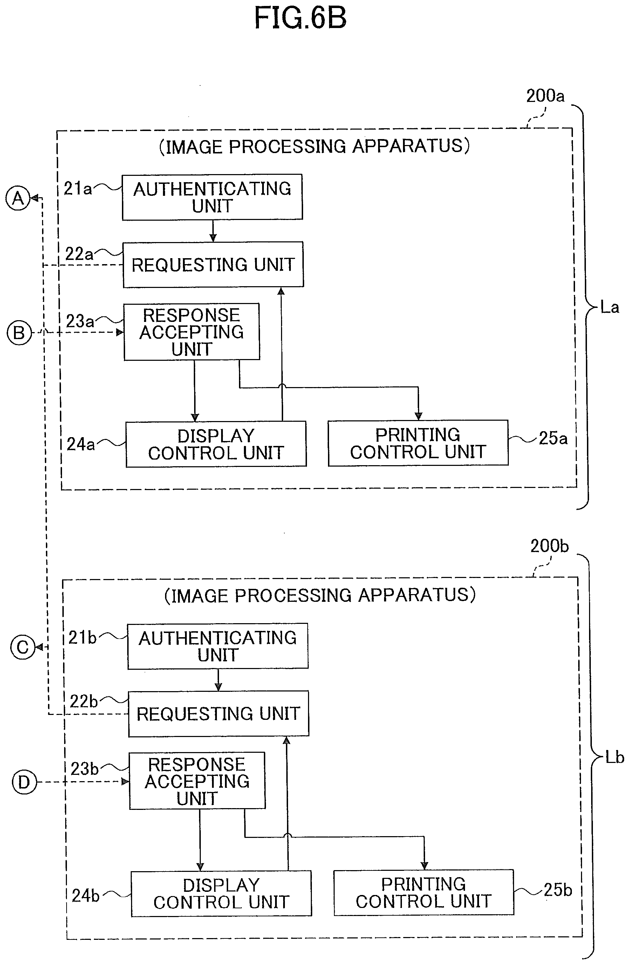

FIGS. 6A and 6B are diagrams showing an exemplary functional configuration of printing control according to the present embodiment.

As shown in FIG. 6A, the printing control function according to the present embodiment includes job accepting units 11a, 11b; job analyzing units 12a, 12b; job managing units 13a, 13b; request accepting units 14a, 14b; request responding units 15a, 15b; a response data generating unit 16a, etc. These functional units represent functions included by the printing control apparatuses 100a and 100b that are installed in the respective areas La and Lb.

On the other hand, the image processing apparatuses 200a and 200b that are installed in the respective areas La and Lb include authenticating units 21a, 21b; requesting units 22a, 22b; response accepting units 23a, 23b; display control units 24a, 24b; printing control units 25a, 25b, etc., and functional units included by the printing control apparatuses 100a and 100b operate in association with functional units included by the image processing apparatuses 200a, 200b.

In the explanations below, for identifying functional units included by equipment units installed in the respective areas La and Lb, a reference letter of 'a' or 'b' is given for convenience. On the other hand, when there is no need to identify the functional unit, a reference letter which does not include 'a' or 'b' is given, generally referring to the functional units.

### Printing control apparatus

The job accepting unit 11 is a functional unit which accepts a job from a user. The job accepting unit 11 receives job data transmitted from the terminal 300 and accepts the job.

The job analyzing unit 12 is a functional unit which analyzes the accepted job. The job analyzing unit 12 analyzes the job data received. The job analyzing unit 12 analyzes printing data ("PJL data: printer job language data; and PDL data: page description language data") received as job data by the job accepting unit 11, etc., for example. As a result, the job analyzing unit 12 obtains information (below called "bibliographic information") related to a job that includes printing conditions, etc., set at the time of submitting a job as analyzed results.

The job managing unit 13 is a functional unit which manages the job accepted from the user. The job managing unit 13 stores (saves) analyzed results (bibliographic information) of the job analyzing unit 12 and received data (job data) of the job accepting unit 11 into a predetermined storage area, and manages data. More specifically, the process is as follows.

For example, the job managing unit 13 stores printing data received as the job data by the job accepting unit 11 into a printing data holding unit 90, which corresponds to a predetermined storage area of the storage apparatus included by the printing control apparatus 100, and manages the printing data job by job. The printing data holding unit 90 is included by the respective printing control apparatuses 100a and 100b. Therefore, the job managing units 13a and 13b store job data sets received by the job accepting units 12a and 12b into the respective printing data holding units 90a and 90b.

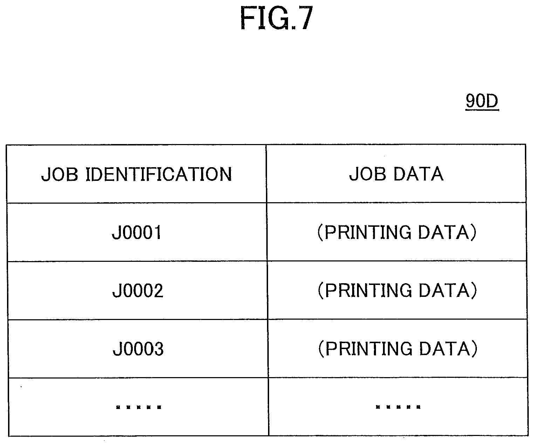

FIG. 7 is a diagram illustrating exemplary data of printing data management information 90D according to the present embodiment.

As shown in FIG. 7, the printing data are managed with the printing data management information 90D in which information items of "job identification" and "job data" are collated. The "job identification" item is an item into which is stored information identifying a job (below called "job identifying information") and the item value is a unique ID value (job identifier) which is assigned at the time of accepting the job. The "job data" item is an item in which the job data are stored, and the item value includes printing data, etc., received as the job data, for example.

In this way, the job managing unit 13 ties the job identification information and the job data to manage data job by job.

Returning to the explanation of FIG. 6A, the job managing unit 13 stores bibliographic information obtained as analysis results by the job analyzing unit 12 into a bibliographic holding unit 80a, which corresponds to a predetermined storage area of the storage apparatus included by the printing control apparatus 100a, and manages the bibliographic information job by job. FIG. 6A shows a configuration in which the printing control apparatus 100a has the bibliographic information holding unit 80a. The bibliographic information holding unit 80a corresponds to an information management location DB which unilaterally manages the bibliographic information shown in FIG. 5. Thus, it suffices that the bibliographic information holding unit 80a is provided at one location within the system 1. Therefore, for the configuration shown in FIG. 6A, the job managing unit 13a stores the bibliographic information obtained as the analysis results by the job analyzing unit 12a into the bibliographic information holding unit 80a included by the printing control apparatus 100a. On the other hand, the job managing unit 13b transmits bibliographic information obtained as the analysis results by the job analyzing unit 12b to the printing control apparatus 100a and stores it in the bibliographic information holding unit 80a.

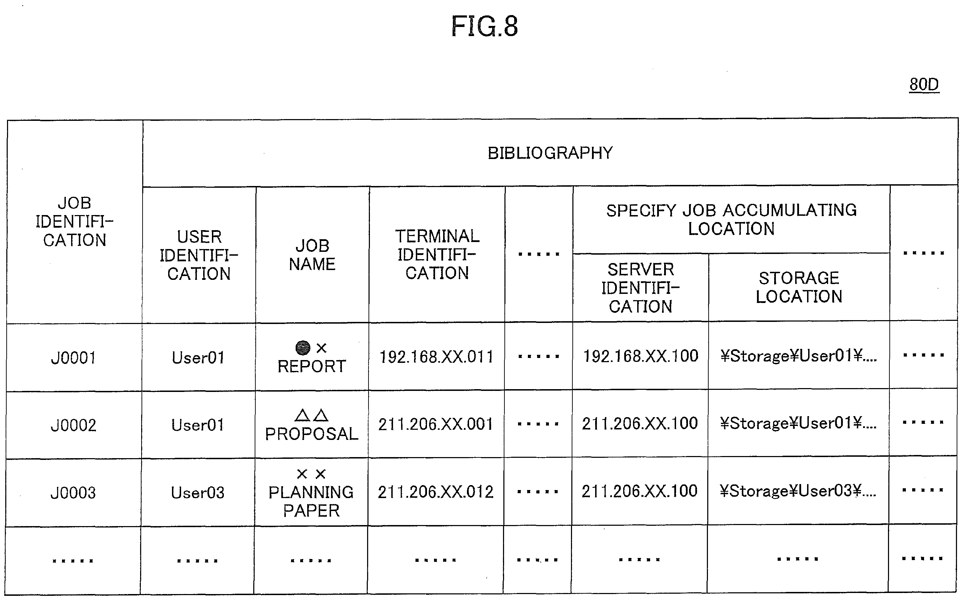

FIG. 8 is a diagram indicating exemplary data of bibliographic management information 80D according to the present embodiment.

As shown in FIG. 8, the bibliographic information is managed by bibliographic management information 80D in which information items of "job identification" and "bibliography" are collated. The "job identification" item is an item into which job identification information is stored. The "bibliography" item is an item in which the bibliographic information is stored, and the item value includes respective values of bibliographic information, etc., obtained as the analysis results, for example. More specifically, it includes respective values of information (below called "user identifying information"), identifying an owner (user) of a submitted job; information (below called "job name information"), indicating a name of the submitted job; and information (below called "terminal identifying information") identifying job submitting equipment (terminal). Moreover, the bibliographic information includes respective values of printing conditions set at the time of job submission, such as double side, color, aggregation, post-process, etc.

A value of the user identifying information includes a user ID (user identifier) used in a log-in process, for example. A value of the job name information includes a value of a character string such as a job name, etc., for example. A value of terminal identifying information includes a network setting value (an IP address: internet protocol address) assigned to the terminal 300, for example.

Moreover, respective values of information (below called "server identifying information") which identify the printing control apparatus 100 in which the job data are stored by the job managing unit 13 and information (below called "storage location information") which indicate data storage locations in the storage area are stored as bibliographic information. These values represent job accumulating destination specifying information.

A value of the server identifying information includes a network setting value which is allocated to the printing control apparatus 100, for example. Moreover, the value of the storage location information includes a character string value of a data path, for example. While the network setting value, and the character string value of the data path are shown as examples of job accumulating location specifying information in FIG. 8, it is not limited thereto. For example, it may be a URI (uniform resource identifier), which indicates an access location of the accumulated job that exists on the system 1.

In this way, the job managing unit 13 ties the job identifying information and the bibliographic information to manage the data job by job.

As described above based on the job identifying information, the server identifying information, and the storage location information, the job managing unit 13 saves the job data and the bibliographic information of the accumulated job in association. As a result, in the present embodiment, the job data are managed for the respective printing control apparatuses 100 and 100b, and only the bibliographic information is unilaterally managed at the information management location DB, which is provided in one location within the system 1.

The request accepting unit 14 is a functional unit which accepts a processing request from a user. The request accepting unit 14 receives processing execution request data (request data) transmitted from the image processing apparatus 200 and accepts the processing request. Here, the processing request accepted includes a request for obtaining printing data of a job to be executed or a request for obtaining a job list of the user.

The request responding unit 15 is a functional unit which responds with processing results to the processing request accepted. The request responding unit 15 transmits executed results of requested processing executed based on the processing execution request data received from the image processing apparatus 200 to a requester as response data and responds to the processing request. Thus, if the above processing request is accepted, a response is made with the job listing information and the printing data.

The response data generating unit 16a is a functional unit which generates response data to the request for obtaining the job listing. Thus, the response data generating unit 16a operates with the printing control apparatus 100a having the bibliographic information holding unit 80a and processes of accepting and responding to the request for obtaining the job listing are also performed at the request accepting unit 14a and the request responding unit 15a of the same environment at which the response data generating unit 16a operates.

When the request for obtaining the job list is accepted at the request accepting unit 14a, the response data generating unit 16a accesses the bibliographic information holding unit 80a based on the user identifying information received at the time of the request acceptance and specifies the bibliographic management information 80D which corresponds to the accumulated job of the user. Based on the bibliographic information obtained from the bibliographic management information 80D specified, response data of the job listing in a predetermined data format are generated.

The response data generated then includes job listing information with job name information of all accumulated jobs of a user as information for displaying on the job list screen W. Moreover, the response data also includes job identifying information for each job, server identifying information, storage location information, etc. In other words, the response data generating unit 16a generates location specifying information.

As described above, the response data generating unit 16a generates the job listing response data which include data used for obtaining job data of a job to be executed that is selected at the responder as well as display data of all accumulated jobs of the user. Then, the request responding unit 15a transmits the job listing response data having such characteristics to the requestor.

As a result, in the present embodiment, in the image processing apparatus 200, the job listing screen W of all accumulated jobs of the user within the system 1 is displayed, making it possible to provide an operating environment in which a job to be executed can be selected without an operation of switching the accumulating location. Moreover, in the present embodiment, in the image processing apparatus 200, based on the storage location information, a pertinent job is obtained from the printing control apparatus 100, which is specified with the server identifying information of the selected job, making it possible to provide a job executing environment without a need for grasping the accumulating location of the job to be executed.

### Image processing apparatus

The authenticating unit 21 is a functional unit which performs user authentication. For example, based on input information received via a recording medium 214a and a log-in screen, the authenticating unit 21 performs user authentication. The storage medium 214a here envisages an Integrated circuit card (an IC card), etc., in which IC card are recorded user information sets (e.g., "user ID" and "password") used at the time of authenticating. In this case, in the image processing apparatus 200, information is read by an IC card reader (a reading apparatus (not shown)), which is connected via the external storage I/F to input information.

Based on the information input, the authenticating unit 21 performs the authenticating process as follows. For example, for performing external authenticating, the authenticating unit 21 transmits the input information to an external authenticating server (not shown), which is installed within the system 1, and obtains authentication results to perform user authentication. Moreover, for performing internal authenticating, the authenticating unit 21 accesses authentication information held in a predetermined storage area of the image processing apparatus 200 and matches the input information and the authentication information to perform user authentication.

The requesting unit 22 is a functional unit which requests an execution of a process accepted from the user. In accordance with a processing execution instruction which is accepted with a screen operation, the requesting unit 22 sends a request for execution of an instructed process to the printing control apparatus 100. Here, the processing execution instruction accepted includes an instruction requesting to obtain a job listing of the user and an instruction requesting to obtain printing data of a job to be executed.

Upon receiving the instruction requesting to obtain the job listing, the requesting unit 22 transmits process executing request data in which is requested executing a process of obtaining the job listing to the printing control apparatus 100a (the request accepting unit 14a), which has the bibliographic information holding unit 80a. The requesting unit 22 has set thereon server identifying information (an IP address) for identifying the printing control apparatus 100a. Moreover, the requesting unit 22 accepts an instruction requesting to obtain a job listing which is issued when the authenticating unit 21 succeeds in user authentication.

Moreover, upon accepting the instruction requesting to obtain the printing data, the requesting unit 22 transmits data requesting process execution for requesting execution of a process of obtaining the pertinent printing data based on the storage location information to the printing control apparatus 100 (request accepting unit 14), which is specified by the server identifying information of the job to be executed that is selected with the screen operation. In other words, based on the server identifying information for each job included in the response data of the job listing, the requesting unit 22 determines the printing control apparatus 100 to be the job obtaining location (specifies the job obtaining location). The requesting unit 22 accepts an instruction for requesting to obtain the printing data from the below-described display control unit 24.

The response accepting unit 23 is a functional unit which accepts a response from the processing requestor. The response accepting unit 23 receives execution results of a request process executed based on process executing request data in the printing control apparatus 100 as response data from the requestor, and accepts a response of the processing request. Thus, when the processing request is performed, printing data and job listing response data (job listing information) are accepted. The job listing response data are received from the printing control apparatus 100a (the request responding unit 15a) having the bibliographic information holding unit 80a, while the printing data are received from the printing control apparatus 100 (request responding unit 15) which stores the job to be executed.

The display control unit 24 is a functional unit which controls a display screen. The display control unit 24 displays an operation screen on an operating panel 220 provided by the image processing apparatus 200 and accepts information input by operating a screen. Based on the job listing response data accepted by the response accepting unit 23, the display control unit 24 displays a job listing screen W on the operating panel 220. Moreover, the display control unit 24 accepts input information such as a job executing instruction and selection (an instruction requesting to obtain printing data) of a job to be executed with an operation on the job listing screen W.

The printing control unit 25 is a functional unit which controls a printing function (printing). The printing control unit 25 sets predetermined printing conditions and passes a raster image (bit map data) of the printing data to a plotter 230 provided by the image processing apparatus 200 to instruct execution of printing. If the response accepting unit 23 obtains pertinent printing data, the printing control unit 25 passes the obtained data to a plotter 230 to instruct execution of printing.

As described above, the display control unit 24 displays the job listing screen W of all accumulated jobs of a logged-in user in the system 1 and accepts a selection of a job to be executed via the job listing screen W. The printing control unit 25 prints printing data of a selected job obtained from the printing control apparatus 100.

As a result, the printing control system 1 according to the present embodiment may provide an environment (a location-free environment) in which an own accumulated job may be executed from anywhere by the user independent of where the printing control apparatus 100 and the image processing apparatus 200 are installed.

As described above, the printing control function is implemented by the respective functional units operating in association. The above-described respective functional units are implemented by programs (software which implements printing control functions) installed in the respective equipment units ("printing control apparatus", "image processing apparatus", etc.) which make up the system 1 being read into a memory ("RAM") from a storage apparatus ("HDD", "ROM", etc.) by an operating apparatus (CPU) and the following process being executed in the respective equipment units.

Detailed operations of a printing control function (operations of functional unit groups in association) according to the present embodiment are explained using a flowchart which indicates a processing procedure. Main processes of the printing control according to the present embodiment include a job accumulating process, a job listing displaying, job execution (printing), etc. Thus, these processes are explained in order below.

### Job accumulation process

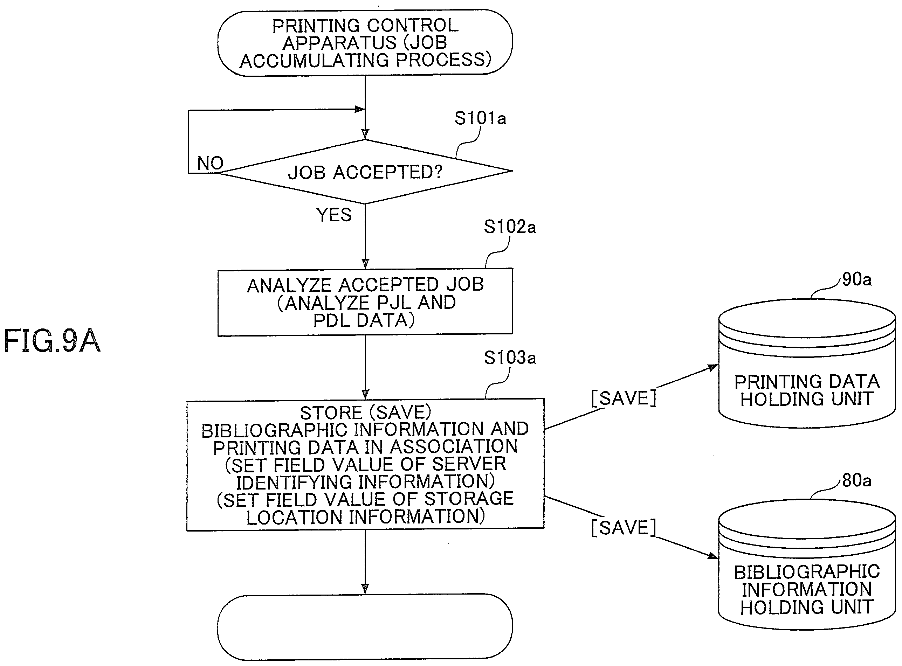

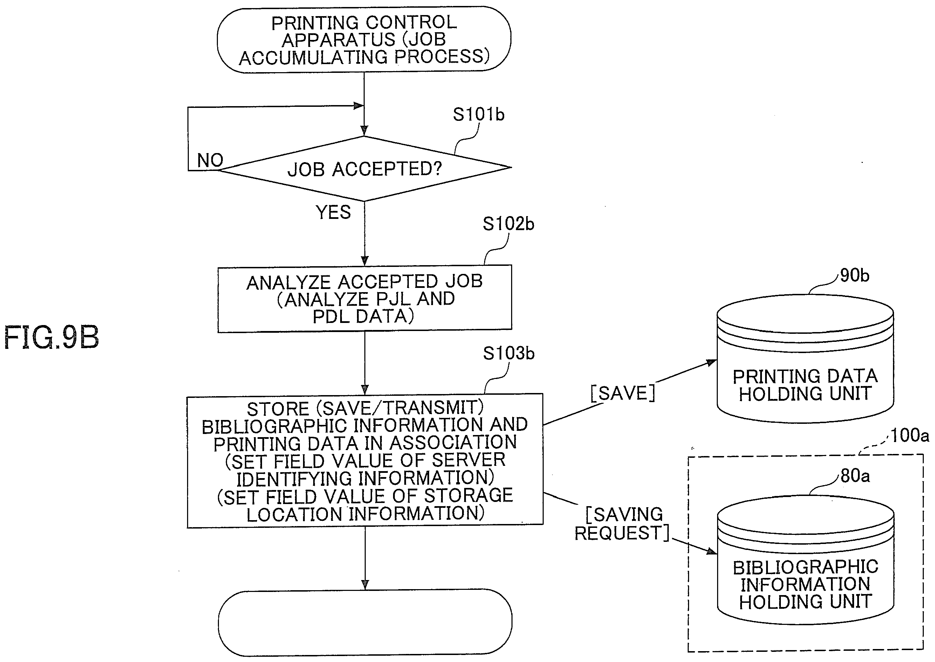

FIGS. 9A and 9B are flowcharts illustrating exemplary processing procedures for job accumulation according to the present embodiment. More specifically, FIG. 9A shows a job accumulation process in the printing control apparatus 100a which unilaterally manages bibliographic information, while FIG. 9B shows a job accumulation process in the printing control apparatus 100b.

As shown in FIG. 9A, in the printing control apparatus 100a, the job accepting unit 11a receives job data transmitted from the terminal 300 and accepts a job from a user (step S101a: YES). The job accepting unit 11a waits for job acceptance until the job data are received (step S101a: NO).

In the printing control apparatus 100a, the job analyzing unit 12a analyzes the job data received (step S102a). Here, the job analyzing unit 12a analyzes PJL and PDL data within printed data received as the job data, for example. As a result, the job analyzing unit 12a obtains bibliographic information as analyzed results.

In the printing control apparatus 100a, the job managing unit 13a stores in association, in a predetermined storage area, the printing data and the bibliographic information obtained as the analyzed results (step S103a).

Here, the job managing unit 13a collates the job data with the job identifying information to save the collated results as new printing data management information 90D in the printing data holding unit 90a. Moreover, the job managing unit 13a collates the bibliographic information with the job identifying information to save the collated results as the new bibliographic management information 80D in the bibliographic information holding unit 80a.

Here, the job managing unit 13a sets a character string value indicating a data path to the printing data and a network setting value allocated to an own apparatus (the printing control apparatus 100a) to an item value of storage location information (job accumulating location specifying information) and server identifying information of the "bibliography" item of the bibliographic management information 80D.

In this way, in the present embodiment, a job accepted from a user is accumulated in the printing control apparatus 100a.

On the other hand, as shown in FIG. 9B, in the printing control apparatus 100b, the job accepting unit 11b receives job data transmitted from the terminal 300 (step S101b: YES).

In the printing control apparatus 100b, the job analyzing unit 12b analyzes job data received (step S102b). As a result, the job analyzing unit 12b obtains bibliographic information as analyzed results.

In the printing control apparatus 100b, the job managing unit 13b associates the printing data and the bibliographic information obtained as the analysis results to store the associated results in a predetermined storage area (step S103b).

Here, the job managing unit 13b collates the printing data with the job identifying information to save the collated results as new printing data management information 90D in the printing data holding unit 90b. Moreover, the job managing unit 13b transmits new bibliographic management information 80D collated with the job identifying information and the bibliographic information to the printing control apparatus 100a, requesting that it be saved in the bibliographic information holding unit 80a.

Here, the job managing unit 13a sets a character string value indicating a data path to the printing data and a network setting value allocated to an own apparatus (the printing control apparatus 100b) to an item value of storage location information and server identifying information of the bibliography item of the bibliographic management information 80D. As a result, in the printing control apparatus 100a, bibliographic management information 80D, which is received from the printing control apparatus 100b is saved in the bibliographic information holding unit 80a.

In this way, in the present embodiment, a job accepted from the user is accumulated in the printing control apparatus 100b, and bibliographic information of the job accumulated within the system 1 is accumulated in the printing control apparatus 100a, which unilaterally manages the bibliographic information.

### Job listing displaying process

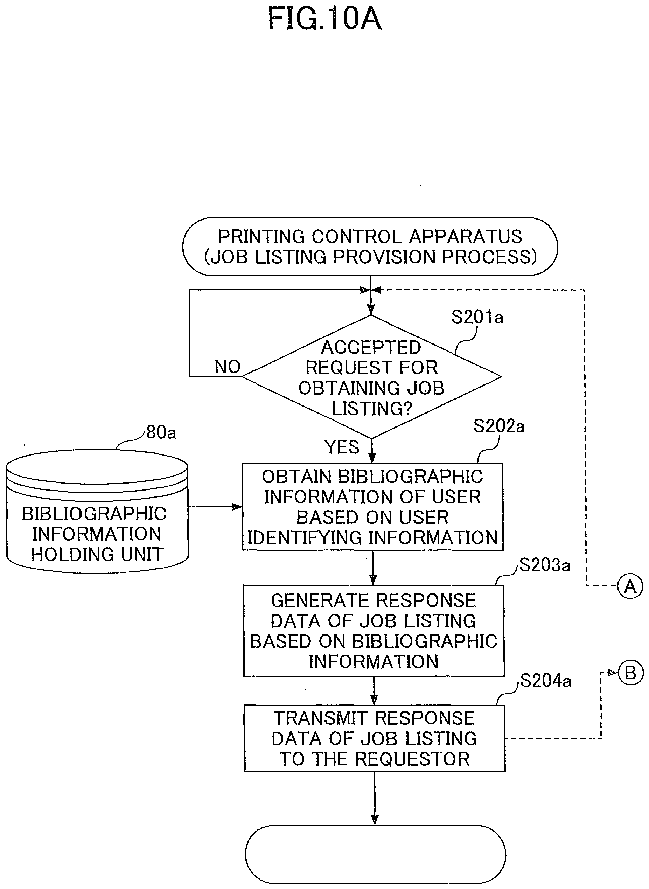

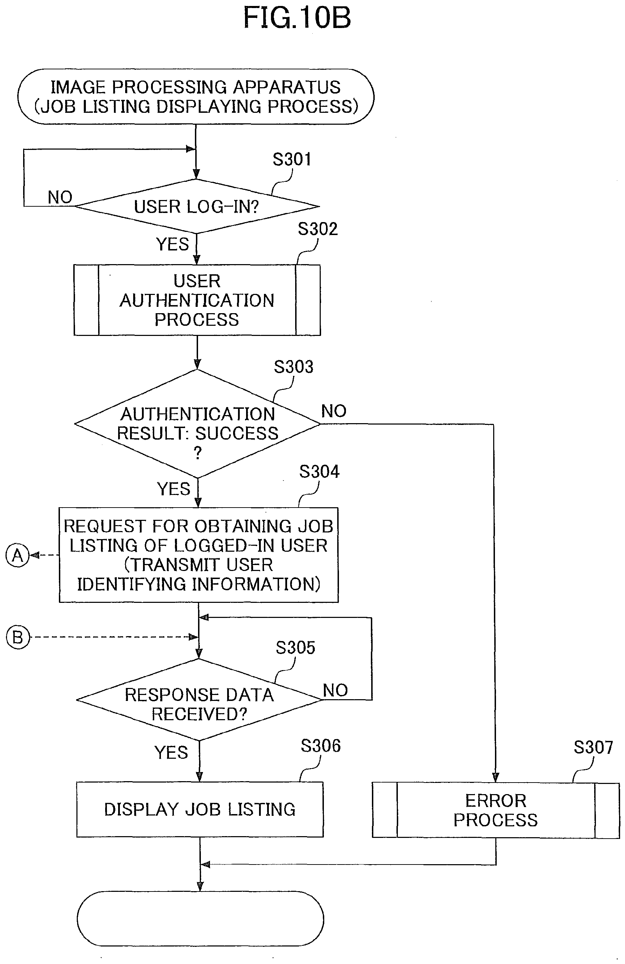

FIGS. 10A and 10B are flowcharts illustrating exemplary processing procedures for job listing displaying according to the present embodiment. More specifically, it shows a job listing displaying process in the image processing apparatus 200 and a job listing providing process in the printing control apparatus 100a which unilaterally manages bibliographic information.

As shown in FIG. 10B, in the image processing apparatus 200, when the authenticating unit 21 accepts a user log-in event (step S301: YES), user authentication is performed based on input information received at that time (step S302). Then, the authenticating unit 21 matches input information and authentication information to conduct user authentication. The authenticating unit 21 waits for log-in acceptance until it accepts a user log-in event (step S301: NO).

If results of authenticating by the authenticating unit 21 are "failure/NG" (step S303: NO), the image processing apparatus 200 performs a predetermined error process (step S307). The then performed error process includes the display control unit 24 displaying an error screen which informs of failing user authentication, for example.

On the other hand, if results of authenticating by the authenticating unit 21 are "success/OK" (step S303: YES), when an instruction requesting that a job list is to be obtained is accepted, the requesting unit 22 requests the printing control apparatus 100a (a request accepting unit 14a) that a process of obtaining a job listing of a logged-in user be executed (step S304). Then, the requesting unit 22 transmits process execution request data which includes user identifying information on a logged-in user to the printing control apparatus 100a.

In response thereto, in the printing control apparatus 100a, the request accepting unit 14a receives the process execution request data transmitted from the image processing apparatus 200 and accepts a request for obtaining a job listing of a logged-in user (step S201: YES). The job accepting unit 14a waits for accepting a processing request until the processing execution request data are received (step S201a: NO).

In the printing control apparatus 100a, based on user identifying information received at the time of accepting a request, bibliographic management information 80D which corresponds to an accumulated job of a logged-in user that is held by the bibliographic information holding unit 80a is specified, and bibliographic information is obtained from the specified bibliographic management information 80D (step S202a: NO).

In the printing control apparatus 100a, based on bibliographic information obtained, the response data generating unit 16a generates response data of a job listing (step S203a).

Here, the then generated response data are described.

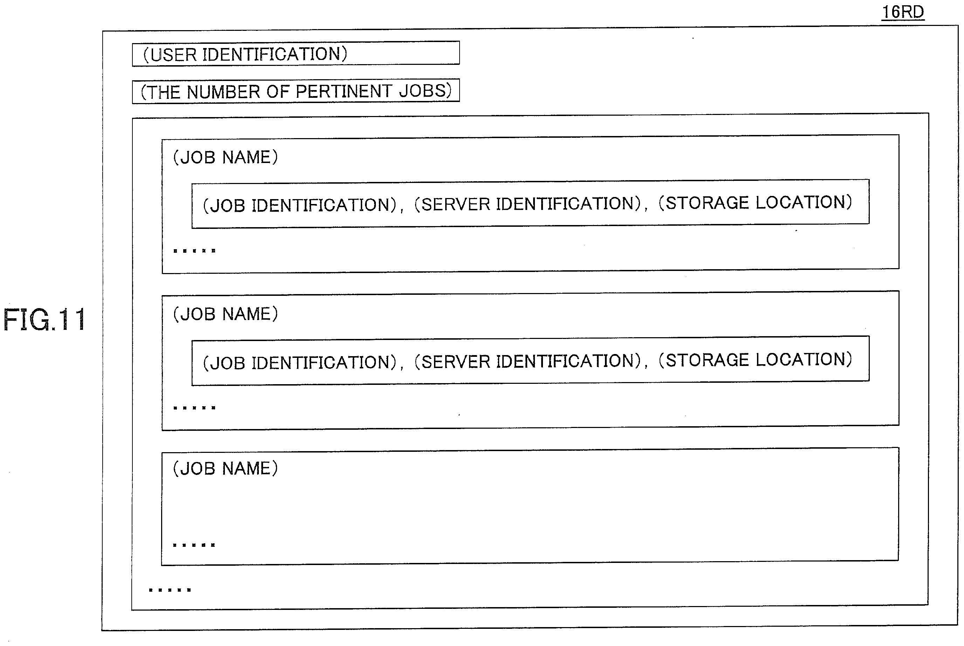

FIG. 11 is a diagram indicating exemplary data of response data 16RD according to the present embodiment.

In the response data 16RD shown in FIG. 11, job listing information with job name information on all accumulated jobs of a logged-in user, the number of pertinent jobs, user identifying information on a logged-in user, etc., are included as display information on a job listing screen W. Moreover, in the response data 16RD are included storage location information, and server identifying information specifying a job accumulating location. These information sets are provided as data in accordance with a hierarchical data structure ("XML: eXtensible markup Language" format, etc.), for example, by a response data generating unit 16a.

Returning to the explanation of FIG. 10A, in the printing control apparatus 100a, the request response unit 15a transmits to the request-originating image processing apparatus 200 of the response data 16RD the job listing generated and responds to a request for obtaining a job listing of a logged-in user (step S204a).

In this way, in the present embodiment, in the printing control apparatus 100a which unilaterally manages bibliographic information, the response data 16RD of a job listing that include data used for obtaining job data of a job to be executed that is selected at a responding destination are generated and provided to a party which makes an obtaining request.

In response thereto, in the image processing apparatus 200, the response accepting unit 23 receives the response data 16RD transmitted from the printing control apparatus 100a and accepts an obtaining processing response of the job list of the logged-in user (step S305: YES). Until receiving the response data 16RD, the response accepting unit 23 waits for a processing response acceptance (step S305: NO).

As a result, in the image processing apparatus 200, based on the received response data 16RD of the job listing, the display control unit 24 causes a job listing screen W to be displayed on an operating panel 220 (step S306).

In this way, in the present embodiment, in the image processing apparatus 200, a job listing screen W of all accumulated jobs of a logged-in user within the system 1 is displayed. In this way, the present embodiment makes it possible to provide an operating environment in which a job to be executed is selected without an accumulating location switching operation.

### Job executing (printing) process

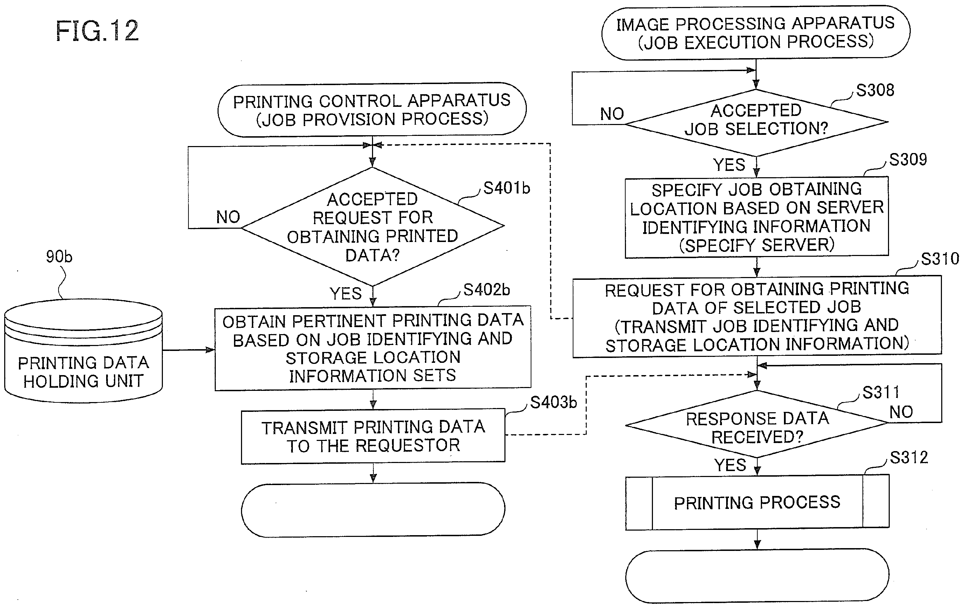

FIG. 12 is a flowchart illustrating exemplary processing procedures for job executing according to the present embodiment. More specifically, it shows a job executing process in the image processing apparatus 200 and a job providing process in the printing control apparatus 100a which unilaterally controls bibliographic information. The job obtaining process in the image processing apparatus 200 corresponds to a process subsequent to displaying the job listing screen W shown in FIG. 10B (step S306).

As shown in FIG. 12, in the image processing apparatus 200, the display control unit 24 accepts a selection event of a job to be executed with an operation on the job listing screen W (step S308). At this time, the display control unit 24 accepts the selection event to accept an instruction which requests for obtaining printing data of the job to be executed that is selected. The display control unit 24 waits for the selection of the job to be executed until it accepts the selection event (step S308: NO).

In the image processing apparatus 200, according to the accepted instruction which requests for obtaining the printing data, the requesting unit 22 specifies a job obtaining location based on the server identifying information of the selected job included in the response data 16RD of the job listing (step S309).

The present process envisages a case such that a network setting value allocated to the printing control apparatus 100b is set in the job identifying information of the selected job. In other words, a case is envisaged such that the printing data of the selection job are stored in the printing control apparatus 100b.

In the image processing apparatus 200, the requesting unit 22 requests a specified printing control apparatus 100b (request accepting unit 14b) that a process of obtaining printing data of the selected job be executed (step S310). Then, the requesting unit 22 transmits process execution requesting data which include storage location information and job identifying information on the selected job to the printing control apparatus 100b.

In response thereto, in the printing control apparatus 100b, the request accepting unit 14b receives process execution request data transmitted from the image processing apparatus 200 and accepts a request for obtaining printing data of the selected job (step S401b: YES). The request accepting unit 14b waits for a processing request acceptance until the process execution request data are received (step S401b: NO).

In the printing control apparatus 100b, based on the storage location information and the job identifying information received at the time of request acceptance, the request responding unit 15b specifies printing data management information 90D which corresponds to the selected job held in the printing data holding unit 90b, and obtains printing data from the specified printing data management information 90D (step S402b).

In the printing control apparatus 100b, the request responding unit 15b transmits obtained printing data to a request-originating image processing apparatus 200, and responds to a request for obtaining the printing data of the selected job (step S403b).

Upon receiving them, in the image processing apparatus 200, the response accepting unit 23 receives printing data transmitted from the printing control apparatus 100b and accepts an obtaining process response of printing data of the selected job (step S311: YES). The response accepting unit 23 waits for accepting a processing response until printing data are received (step S311: NO).

As a result, in the image processing apparatus 200, the printing control unit 25 sets predetermined printing conditions (printing conditions of bibliographic information of the selected job in a plotter 230 and passes on the received printing data to instruct that printing be executed (step S312).

In this way, in the present embodiment, in the image processing apparatus 200, a selection of a job to be executed is accepted from the job listing screen W and a pertinent job is obtained from a printing control apparatus 100b specified with the server identifying information of the selected job based on the storage location information, and the selected job is executed. In this way, the present embodiment makes it possible to provide a job executing environment without the need to grasp an accumulating location of a job to be executed.

### Summary

As described above, with the printing control apparatus 100 according to the above embodiment, upon the request accepting unit 14 accepting a request for obtaining a job list from the image processing apparatus 200, the response data generating unit 16 performs the following process.

The response data generating unit 16 obtains bibliographic information on an accumulated job of a user from a bibliographical information holding unit 80 which unilaterally manages multiple bibliographic information sets corresponding to all accumulated jobs in the system 1. Based on the obtained bibliographic information, the response data generating unit 16 generates the response data 16RD of a job list of a user that include job accumulating location identifying information.

In this way, in the printing control apparatus 100, the request responding unit 15 responds with the response data 16RD of a job listing that is generated to the request-originating image processing apparatus 200.

Moreover, upon the request accepting unit 14 accepting from the image processing apparatus 200 a request for obtaining a job, in the printing control apparatus 100, the request responding unit 15 obtains a pertinent job from accumulated jobs held by an own apparatus.

In this way, in the printing control apparatus 100, the request responding unit 15 responds, to the request-originating image processing apparatus 200 with the obtained job.

In this way, in the printing control apparatus 100 according to the present embodiment, in order to find a job to execute, the user may simply and conveniently execute the job without performing the operation of switching the location to accumulate the job or grasping the location to accumulate the job. The printing control apparatus 100 according to the present embodiment makes it possible to realize a highly convenient printing service in the system 1 having multiple locations to accumulate the job.

### A second embodiment

In the present embodiment, a technique is proposed of responding with listing information on accumulated jobs held in a printing control apparatus, which can obtain a job from an image processing apparatus, from the printing control apparatus which unilaterally manages bibliographic information to the image processing apparatus.

The technique proposed in the present embodiment is to prevent the following scene. When a user selects a job to be executed via a job listing screen in the image processing apparatus, a desired job execution cannot be performed if it is impossible to obtain the selected job from the printing control apparatus.

Therefore, in the present embodiment, a scheme is proposed of responding with a job listing which only includes accumulated jobs which can be obtained after a job selection is made via the job listing screen from the printing control apparatus which unilaterally manages bibliographic information to the image processing apparatus.

Below only matters which differ from the above embodiment are explained, so that the explanation is omitted, giving the same reference letter to the same matter.

### Printing control function

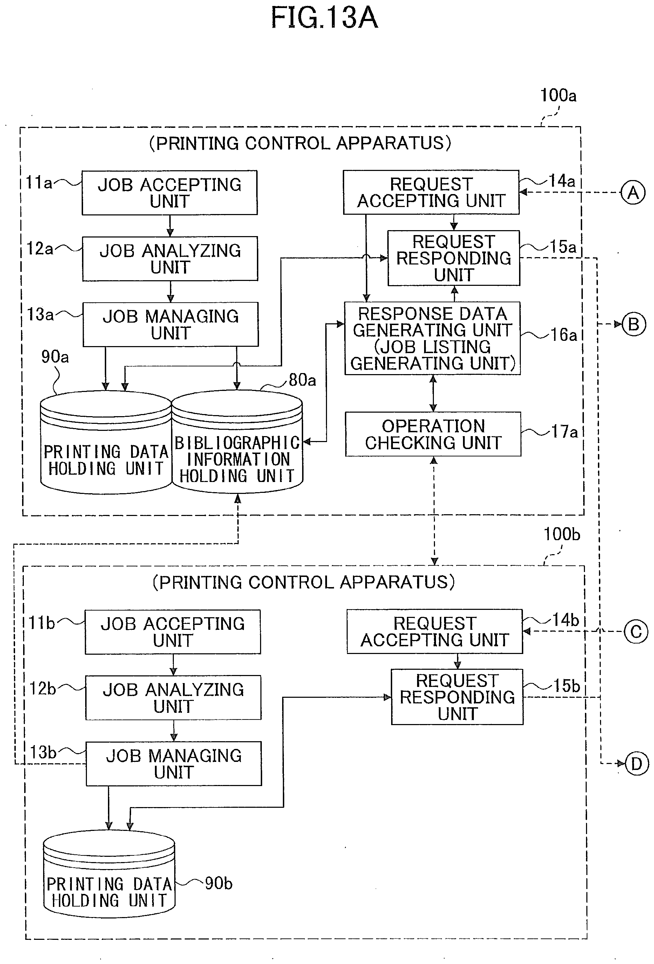

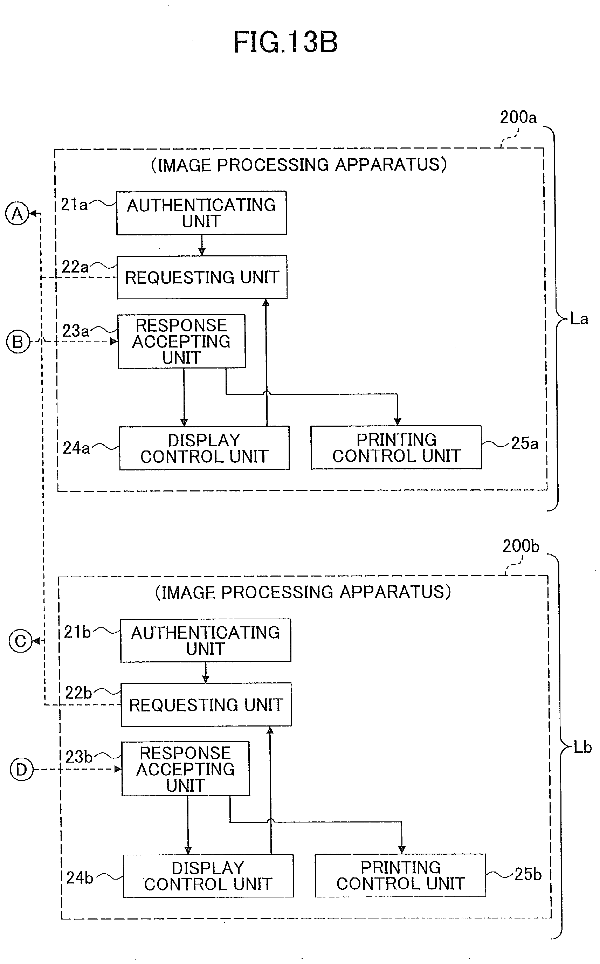

FIGS. 13A and 13B are diagrams showing an exemplary functional configuration of printing control according to the present embodiment.

The difference between FIG. 6A and FIG. 13A (the difference with the functional configuration according to the above embodiment) is that the printing control apparatus 100a, which unilaterally manages bibliographic information, includes an operation checking unit 17a.

The operation checking unit 17a is a functional unit which checks an operating state of the printing control apparatus 100 which stores a job. The operation checking unit 17a functions in collaboration with the response data generating unit 16a. Thus, the operation checking unit 17a operates in the printing control apparatus 100a in which the response data generating unit 16a operates.

Based on the job identifying information included in bibliographic information obtained from the bibliographic information holding unit 80a by the response data generating unit 16a, the operation checking unit 17a specifies the printing control apparatus 100 which stores jobs, and checks an operating status for the printing control apparatus 100 specified.

The operation checking unit 17a checks the operating status according to the following method, for example. The operation checking unit 17a transmits a predetermined equipment management command to the printing control apparatus 100 and receives response results (presence or absence of the response/contents of the response) from the printing control apparatus 100 to check the status. Based on the status checking results, the operation checking unit 17a determines whether the printing control apparatus 100 which stores the job can obtain the job.

More specifically, when results of state checking are no response/no response errors, it is determined that the printing control apparatus 100, which stores a job, is in a status in which the job cannot be obtained.

In response thereto, based on determining results (job obtainable/non-obtainable) by the operation checking unit 17a, the response data generating unit 16a specifies bibliographic information of accumulated jobs stored in another printing control apparatus 100 for which it is determined that a job can be obtained therefrom. Here, bibliographic information on an accumulated job stored in the printing control apparatus 100 for which it is determined such that a job cannot be obtained therefrom is deleted.

Based on the specified bibliographic information, the response data generating unit 16a generates the response data 16RD of the job listing.

In this way, in the present embodiment, job list information which includes only accumulated jobs which can be obtained after job selection is provided from the printing control apparatus 100a which unilaterally manages bibliographic information to the image processing apparatus 200.

### Job listing provision process

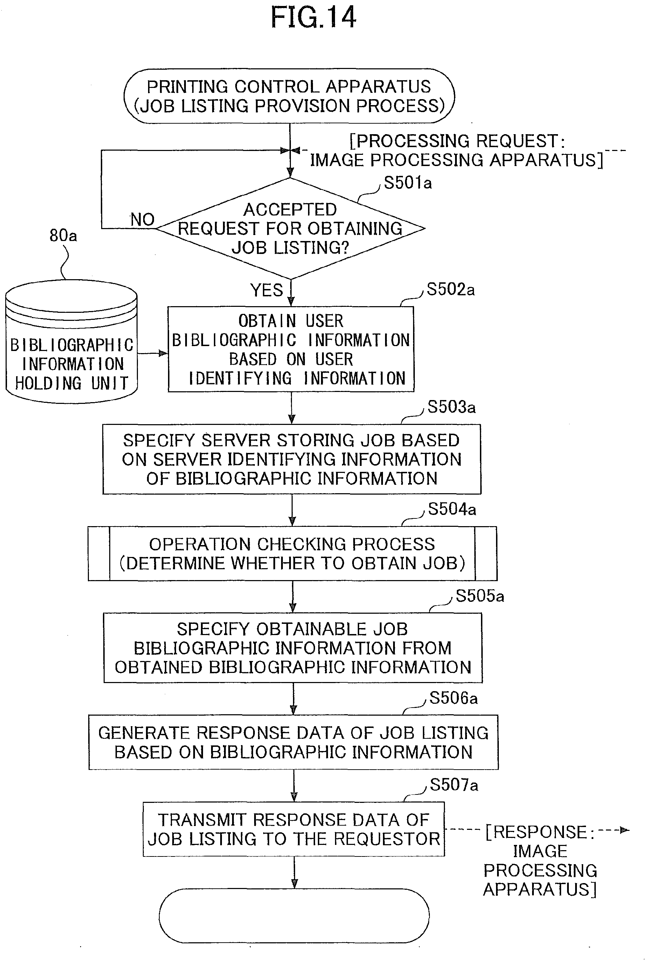

FIG. 14 is a flowchart illustrating exemplary processing procedures for job listing provision according to the present embodiment. More specifically, a job listing providing process in the printing control apparatus 100a which unilaterally manages the bibliographic information is shown.

As shown in FIG. 14, in the printing control apparatus 100a, the request accepting unit 14a receives process execution request data transmitted from the image processing apparatus 200 and accepts a request for obtaining a job list of a logged-in user (step S501a: YES).

In the printing control apparatus 100a, based on user identifying information received at the time of accepting a request, the response data generating unit 16a specifies bibliographic management information 80D which corresponds to an accumulated job of a logged-in user that is held by the bibliographic information holding unit 80a, and obtains bibliographic information from the specified bibliographic management information 80D (step S502a).

In the printing control apparatus 100a, based on job identifying information included in bibliographic information obtained from the bibliographic information holding unit 80a, the operation checking unit 17a specifies the printing control apparatus 100 in which a job is stored (step S503a).

The present process envisages a case such that network setting values allocated respectively to two printing control apparatuses 100a and 100b are set in job identifying information included in the obtained bibliographic information; moreover, it envisages a case such that, at some time, the printing control apparatus 100b has failed for some reason.

In the printing control apparatus 100a, the operation checking unit 17a checks an operating status for the specified two printing control apparatuses (step S504a). Here, based on status checking results, the operation checking unit 17a determines whether own equipment (a printing control apparatus 100a) and a printing control apparatus 100b are respectively job obtainable / not job obtainable.

In the printing control apparatus 100a, from previously obtained bibliographic information sets, the response data generating unit 16a specifies bibliographic information on accumulated jobs stored in own equipment (the printing control apparatus 100a) which is determined to be job obtainable (step S505a). Here, the response data generating unit 16a deletes bibliographic information on accumulated jobs stored in the printing control apparatus 100b determined to be not job obtainable from the previously obtained bibliographic information sets.

In the printing control apparatus 100a, based on specified bibliographic information, the response data generating unit 16a generates response data 16RD of a job listing of a user including information for specifying own equipment (the printing control apparatus 100a) which is job obtainable (step S506a).

In the printing control apparatus 100a, the request response unit 15a transmits request-originating image processing apparatus 200 response data 16RD of a job listing generated and responds to a request for obtaining a job listing of a logged-in user (step S507a).

In this way, in the present embodiment, in the printing control apparatus 100a which unilaterally manages bibliographic information, the response data 16RD of a job listing which includes only obtainable accumulated jobs after a job selection is made via a job listing screen W are generated and provided to the obtaining requestor.

### Summary

As described above, with the printing control apparatus 100 according to the above embodiment, upon accepting a request for obtaining a job listing from the image processing apparatus 200 by the request accepting unit 14, the response data generating unit 16 and the operation checking unit 17a perform the following process:

The response data generating unit 16 obtains bibliographic information on an accumulated job of a user from a bibliographical information holding unit 80 which unilaterally manages multiple bibliographic information sets corresponding to all accumulated jobs in the system 1. From server identifying information included in bibliographic information obtained, the operation checking unit 17 specifies the printing control apparatus 100 which stores a job and checks the operating status of the specified printing control apparatus 100.

Based on status checking results, the response data generating unit 16 specifies bibliographic information on accumulated jobs stored in the printing control apparatus 100 determined to be job obtainable from previously obtained bibliographic information sets. Based on the specified bibliographic information obtained, the response data generating unit 16 generates response data 16RD of a job listing of a user that include job accumulating destination identifying information which is job obtainable.

In this way, in the printing control apparatus 100, the request responding unit 15 responds with the response data 16RD of a job listing that is generated to the request-originating image processing apparatus 200.

Moreover, upon the request accepting unit 14 accepting a request for obtaining a job that is from the image processing apparatus 200, in the printing control apparatus 100, the request responding unit 15 obtains a pertinent job from accumulated jobs held by an own apparatus.

In this way, in the printing control apparatus 100, the request responding unit 15 responds, to the request-originating image processing apparatus 200, with the obtained job.

In this way, in the printing control apparatus 100 according to the present embodiment, the same effect as the first embodiment is effected and a problem is prevented in advance such that, when a user selects a job to be executed via a job listing screen W, the selected job cannot be obtained from the printing control apparatus 100 and the job cannot be executed.

In the above-described embodiments explained in the foregoing, "the printing control function" according to the above-described embodiments is realized by programs, which have coded the respective processing procedures explained using the figure in a programming language suitable for an operating environment (platform), being executed by processing devices (CPU) of respective equipment units which make up the system 1.

The above programs may be stored in computer-readable recording media 103a, 214a. In this way, for example, the above-described programs may be installed via a drive apparatus 103, for a printing control apparatus 100. Moreover, the printing control apparatus 100 is provided with an interface apparatus 107, also making it possible to use telecommunications lines to perform downloading and installation.

For example, the above-described programs may be installed via an external storage I/F 214, for an image processing apparatus 200. Moreover, the image processing apparatus 200 is provided with a network I/F 213, also making it possible to use telecommunications lines to perform downloading and installation.

In the following, variations of the above-described embodiments are described. Below only matters which differ from the above embodiment are explained, so that the explanation is omitted, giving the same reference letter to the same matter.

### Variation 1

In the present Variation 1, in the printing control apparatus 100a which unilaterally manages bibliographic information, a technique is proposed of restricting in job accumulating destination locations, a job to be displayed on the job listing screen W in the image processing apparatus 200.

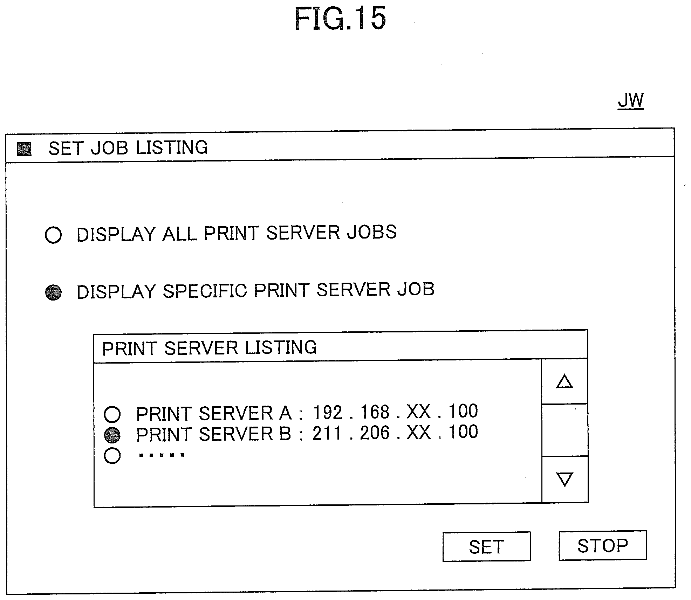

FIG. 15 is a diagram illustrating an exemplary setting screen of a job listing according to the present

### Variation 1.

For example, via a setting screen JW as shown in FIG. 15, the printing control apparatus 100a makes it possible to set the printing control apparatus 100 which stores a job displayed on the job listing screen W.

In the setting screen JW shown in FIG. 15, either one of a setting "without a display restriction" in which accumulated jobs stored in all printing control apparatuses 100 provided within the system 1 are made display candidates on the job listing screen W, and a setting "with the display restriction" in which accumulated jobs stored in a specific printing control apparatus 100 of all printing control apparatuses 100 set within the system 1 are set as display candidates on the job listing screen W, may be set as a display restriction present/absent value. Moreover, in the setting screen JW, when accumulated jobs stored in a specified printing control apparatus 100 are set as the display candidates, one or more printing control apparatuses 100 which store a job to be made a candidate for displaying are selected, so that they can be set as equipment designating values.

In this way, in the printing control apparatus 100a, the display restriction present/absent values and /or the equipment designating values (job identifying information sets) are obtained as a setting value of the setting screen JW.

In response thereto, the response data generating unit 16a performs the following process when generating the response data 16RD of the job listing. Based on the display restriction present/absent value, the response data generating unit 16a determines whether display restriction of the job listing screen W is performed. If it is determined that the display restriction is performed, the response data generating unit 16a specifies a printing control apparatus 100 which stores display candidate jobs based on the equipment designating value.

Based on job identifying information of the specified printing control apparatus 100, the response data generating unit 16a accesses the bibliographic information holding unit 80a and specifies bibliographic management information 80D corresponding to a display candidate job.

Based on user identifying information received at the time of accepting a request for obtaining a job listing, the response data generating unit 16a specifies bibliographic management information 80D corresponding to accumulated jobs of the user from the specified bibliographic management information set 80D. Based on the bibliographic information obtained from the specified bibliographic management information 80D, the response data generating unit 16a generates the response data 16RD of the job listing.

In this way, in the present embodiment, job listing information which includes only accumulated jobs for which displaying is permitted in accordance with display control of the pre-set job listing screen W is provided from the printing control apparatus 100a which unilaterally manages bibliographic information to the image processing apparatus 200.

### Job listing providing process

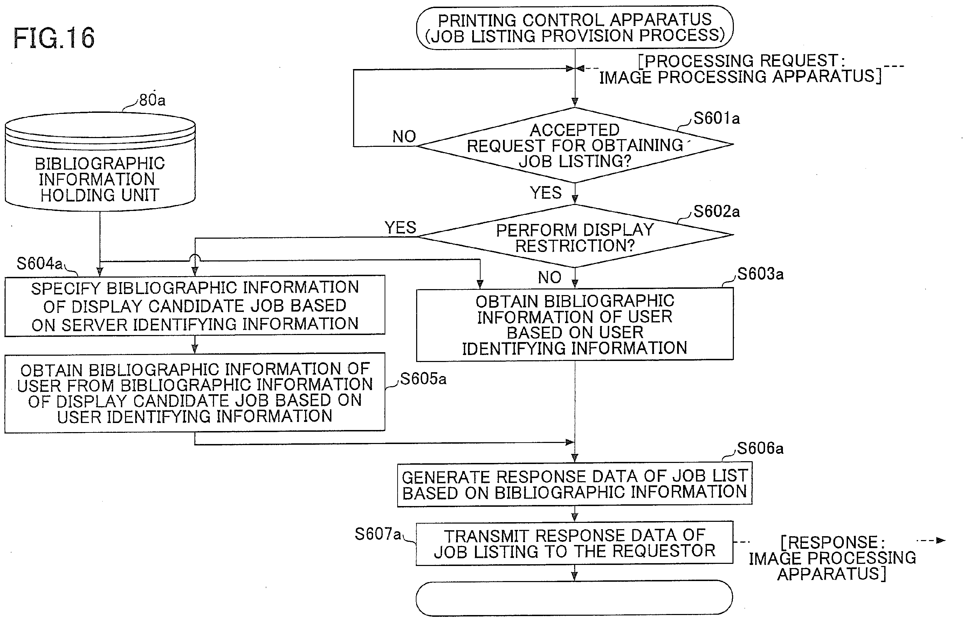

FIG. 16 is a flowchart illustrating exemplary processing procedures for job listing provision according to the present Variation 1. More specifically, a job listing provision process in the printing control apparatus 100a which unilaterally manages the bibliographic information is shown.

As shown in FIG. 16, in the printing control apparatus 100a, the request accepting unit 14a receives process execution request data transmitted from the image processing apparatus 200 and accepts a request for obtaining a job list of a logged-in user (step S601a: YES).

In the printing control apparatus 100a, based on display restriction present/absent value, which is a setting value from the setting screen JW, the response data generating unit 16a determines whether to perform display restriction of the job listing screen W (whether the setting value is "with display restrictions"/"without display restrictions") (step S602a).

In the printing control apparatus 100a, if it is determined that the display restriction is not performed (step S602a: NO), based on user identifying information received at the time of accepting a request, the response data generating unit 16a specifies bibliographic management information 80D which corresponds to an accumulated job of a logged-in user that is held by the bibliographic information holding unit 80a, and obtains bibliographic information from the specified bibliographic management information 80D (step S603a).

On the other hand, if it is determined to perform a display restriction (if it is determined that the setting value is "with display restriction"), based on an equipment specifying value, which is a setting value from the setting screen JW, the bibliographic management information 80D is specified which corresponds to a display candidate job held in the bibliographic information holding unit 80a (step S604a).

In the printing control apparatus 100a, based on user identifying information received at the time of accepting a request, a response data generating unit 16a specifies bibliographic management information 80D which corresponds to an accumulated job of a logged-in user from the bibliographic management information set 80D specified, and obtains bibliographic information from the specified bibliographic management information 80D (step S605a).

In the printing control apparatus 100a, based on bibliographic information obtained, the response data generating unit 16a generates response data 16RD of a job listing including job accumulation location specifying information (step S606a).

In the printing control apparatus 100a, the request response unit 15a transmits, to a request-originating image processing apparatus 200, the response data 16RD of a job listing generated and responds to a request for obtaining a job listing of a logged-in user (step S607a).

In this way, in the present embodiment, in the printing control apparatus 100a which unilaterally manages bibliographic information, the response data 16RD of the job listing which includes only accumulated jobs for which displaying is permitted are generated and provided to the obtaining request originator.

In this way, in the present Variation 1, the image processing apparatus 200 may restrict jobs displayed on the job listing W in units of job accumulated locations. In this way, the system manager may perform a system operation with high information confidentiality.

### Variation 2

In the present Variation 2, in the image processing apparatus 200, a technique is proposed of restricting a job to be displayed on the job listing screen W for each job accumulation location.

### Job listing displaying process

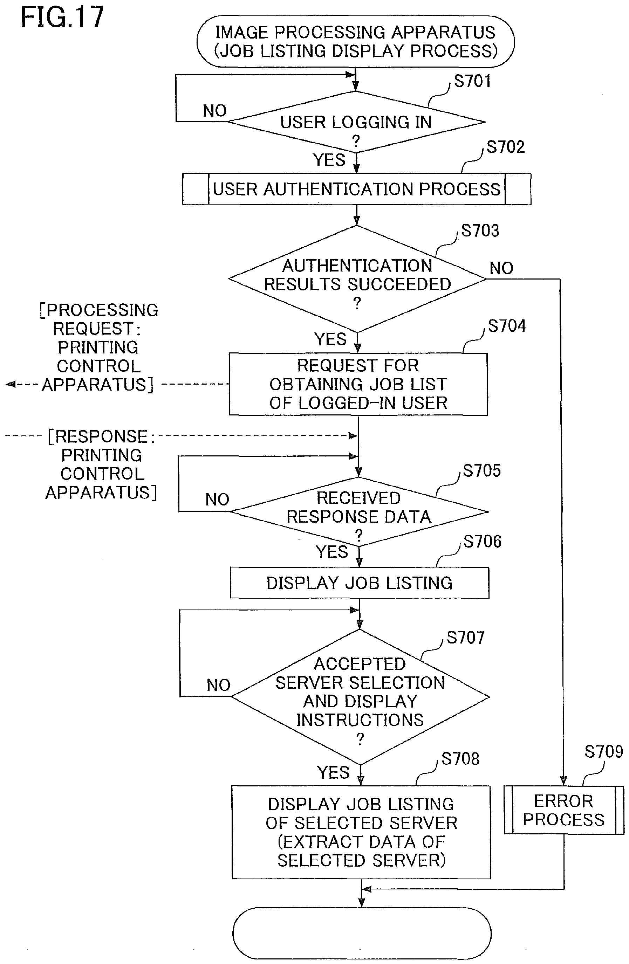

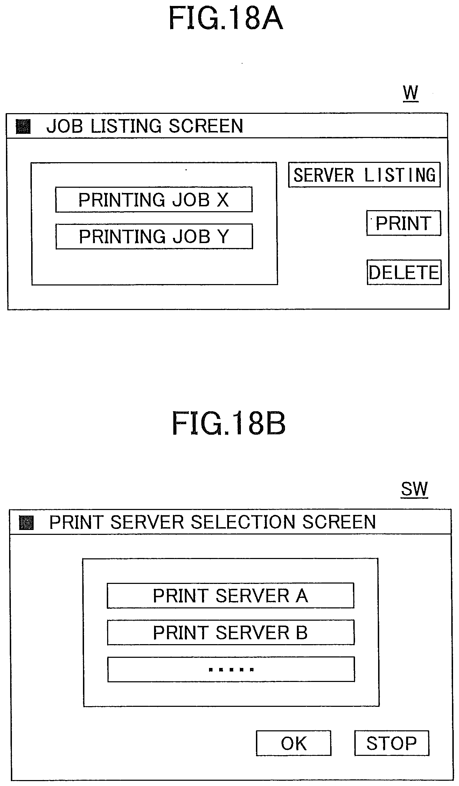

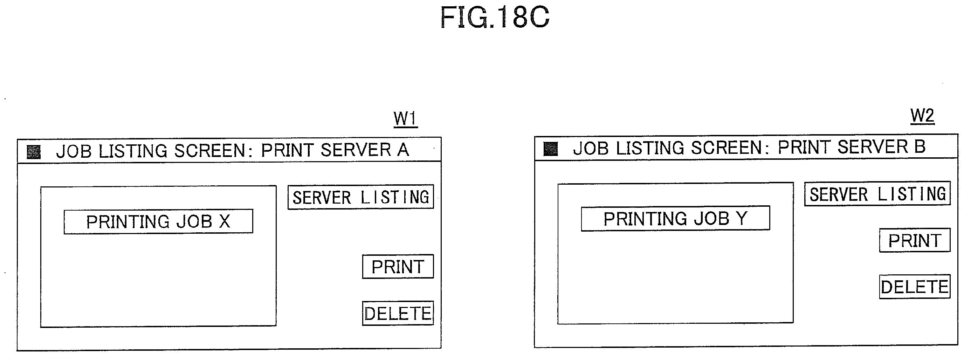

FIG. 17 is a flowchart illustrating exemplary processing procedures for job listing displaying according to the present Variation 2. More specifically, a job listing displaying process in the image processing apparatus 200 is shown. Moreover, FIGS. 18A, 18B, and 18C are diagrams illustrating the exemplary screen transition for the job listing displaying according to the present Variation 2.

As shown in FIG. 17, in the image processing apparatus 200, when the authenticating unit 21 accepts a user logged-in event (step S701: YES), user authentication is performed based on input information received at that time (step S702).

When results of authenticating by the authenticating unit 21 are "failure/NG" (step S703: NO), the image processing apparatus 200 performs a predetermined error process (step S709).

On the other hand, in the image processing unit 200, when results of authenticating by the authenticating unit 21 are "success/OK" (step S703: YES), when an instruction requesting that a job listing be obtained is accepted, the requesting unit 22 requests of the printing control apparatus 100a (a request accepting unit 14a) that a process of obtaining a job list of a logged-in user be executed (step S704).

As a result, in the printing control apparatus 100a, the request response unit 15a transmits, to the image processing apparatus 200, the response data 16RD of the job listing including job accumulating location specifying information, and responds to a request for obtaining the job listing of the log-in user.

In response thereto, in the image processing apparatus 200, the response accepting unit 23 receives the response data 16RD transmitted from the printing control apparatus 100a and accepts an obtaining process response of a job list of a logged-in user (step S705: YES).

As a result, in the image processing apparatus 200, based on the response data 16RD of the job listing received, the display control unit 24 displays a job listing screen W, shown in FIG. 18A on the operating panel 220 (step S706).

Here, in the image processing apparatus 200, upon receiving a pressing event of a "server listing" button on the job listing screen W, the display control unit 24 displays a server selection screen SW shown in FIG. 18B. On the displayed server selection screen SW is displayed an equipment selection button ("print server A" or "print server B") which can selectively specify all printing control apparatuses 100 installed within the system 1.

In this way, the user may press the equipment selection button to specify a printing control apparatus 100, which is a job accumulating location, and to press a display specifying button (an "OK" button) to instruct redisplaying (restrictive displaying) of job listing information for each job accumulating location.

In the image processing apparatus 200, when the display control unit 24 accepts an event of pressing equipment selection and display instruction buttons on the job listing display screen W (step S707: YES), it extracts data corresponding to the selected printing control apparatus 100 from the received job listing response data 16RD. Based on the extracted data, the display control unit 24 displays a job listing screen W1 or W2 in units of job accumulating locations shown in FIG. 18B or FIG. 18C on the operating panel 220 (step S708). The display control unit 24 waits for redisplay acceptance until it accepts an event of pressing equipment selection and display instruction buttons (step S707: NO).

FIG. 18B shows an exemplary screen of a job listing of a printing control apparatus 100a that is displayed when a printing control apparatus 100a (print server A) is selected with the equipment selection button. On the other hand, FIG. 18C shows an exemplary screen of a job listing of a printing control apparatus 100b that is displayed when a printing control apparatus 100b (print server B) is selected with the equipment selection button.

In this way, in the present Variation 2, in the image processing apparatus 200, first a job listing screen W of all accumulated jobs of the logged-in user within the system 1 is displayed, and then the job listing screen W is redisplayed in units of job accumulating destinations.

In this way, in the present Variation 2, the job listing screen W may be restrictively displayed for each job accumulating location. In this way, the user may be able to narrow down to pertinent job candidates easily and conveniently even when many own accumulated jobs exist in the system 1 and it is difficult to find a job to execute.

### Variation 3

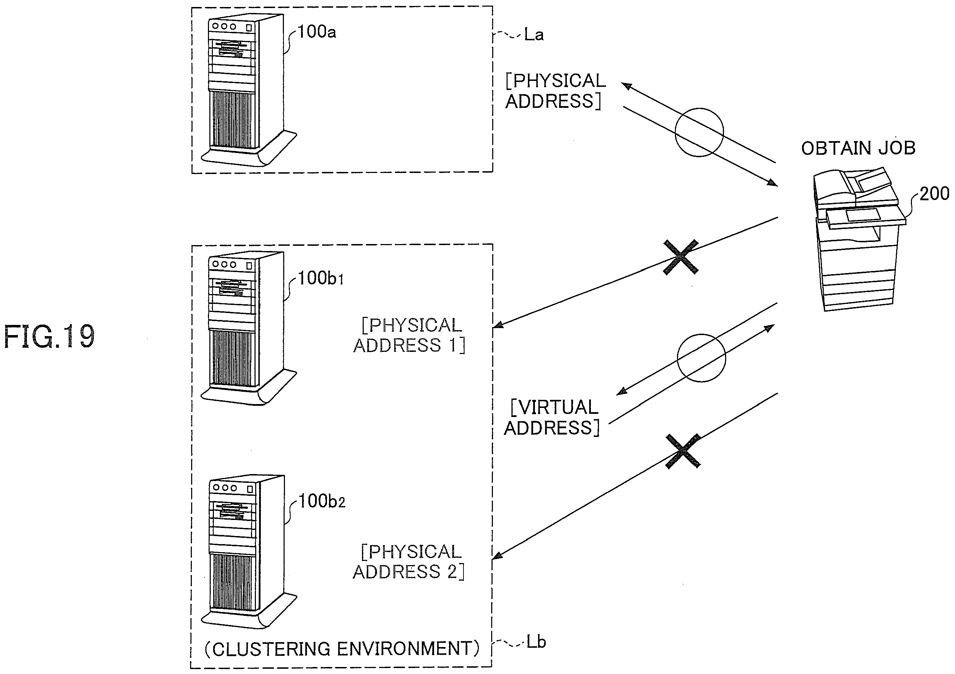

In the present Variation 3, a method of responding to a printing control system 1 which adopts a clustering technique is proposed. Clustering is a technique of linking multiple equipment units and causing them to act as if they constitute one equipment unit as a whole relative to other equipment units. A printing control system 1 which adopts such a technique involves problems as shown in FIG. 19, for example.

FIG. 19 is a diagram illustrating an exemplary operation of a printing control system 1 which adopts the clustering technique.

FIG. 19 shows an exemplary system configuration which includes an area La in which one printing control apparatus 100a is installed and an area Lb in which two printing control apparatuses 100b₁ and 100b₂ are installed. In other words, in the area Lb is constructed a network environment (a cluster environment) which adopts a clustering technique.

For example, when a job to be executed is obtained from a printing control apparatus 100a arranged in the area La of a non-clustering environment in which the clustering technique is not adopted, the image processing apparatus 200 may obtain it based on a network setting value "a physical address" allocated to the printing control apparatus 100a.

On the other hand, when a job to be executed is obtained from the printing control apparatus 100b arranged in the area Lb of the clustering environment, the image processing apparatus 200 cannot obtain it based on network values "physical addresses 1 and 2" allocated to the respective printing control apparatuses 100b₁ and 100b₂.

This is because, in the clustering environment, as described above, the multiple equipment units are linked and are caused to act as if they constitute one equipment unit as a whole relative to other equipment units, so that an access from outside is possible based on a network setting value "a virtual address" allocated virtually. In other words, it is not possible to access from outside based on network setting values "physical addresses" allocated to the respective equipment units.

Thus, in the printing control system 1 which adopts the clustering technique, the following process needs to be performed. In the printing control apparatus 100, either one of network values (a value of either one of "physical address" or "virtual address") which may be accessible from outside is saved as server identifying information of a "bibliography" item of the bibliographic management information 80D according to own equipment installation environment at the time of job accumulating. In other words, in the system 1, it is necessary to have a network setting value "virtual address" of a clustering environment recognized.

### Job accumulation process

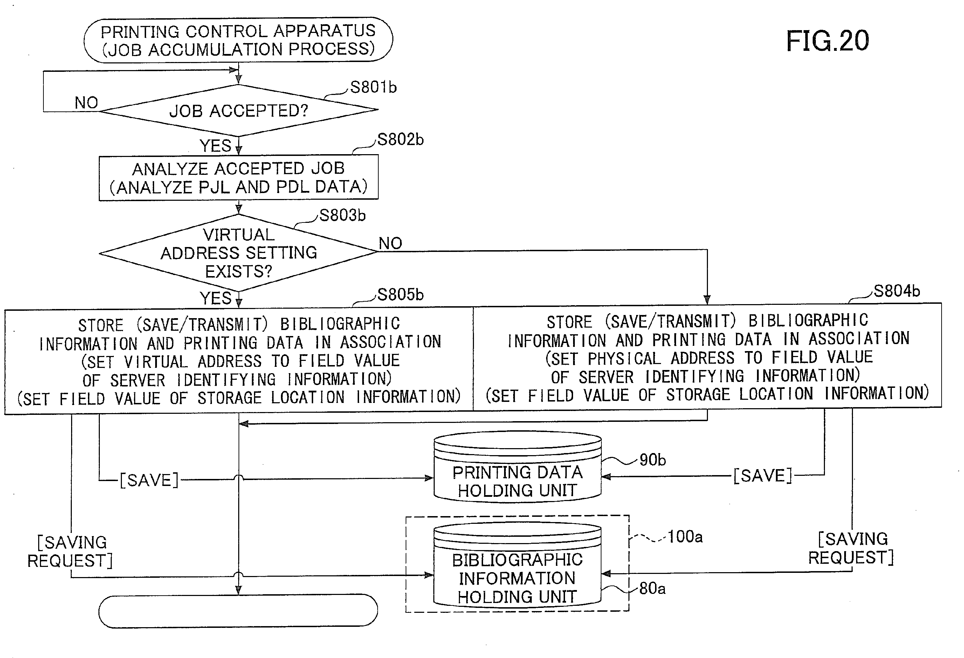

FIG. 20 is a flowchart illustrating exemplary processing procedures for job accumulation according to the present Variation 3. More specifically, FIG. 20, in correspondence with the system 1 in FIG. 19, shows a job accumulation process in the printing control apparatus 100b installed in the clustering environment.

As shown in FIG. 20, in the printing control apparatus 100b, the job accepting unit 11b receives job data transmitted from the terminal 300 (step 801b: YES).

In the printing control apparatus 100b, the job analyzing unit 12b analyzes job data received (step S802b). As a result, the job analyzing unit 12b obtains bibliographic information as analyzed results.

In the printing control apparatus 100b, the job managing unit 13b determines (step S803b) whether a network setting value "a virtual address" of a clustering environment is set for an own equipment unit (printing control apparatus 100b).

If it is determined that the network setting value "a virtual address" is not set (step S803b: NO), in the printing control apparatus 100b, the job managing unit 13b executes a process of storing printing data and bibliographic information for "without virtual address setting" (step S804b).

Here, the job managing unit 13b collates the printing data with the job identifying information to save the collated results as new printing data management information 90D in the printing data holding unit 90b. Moreover, the job managing unit 13b transmits new bibliographic management information 80D collated with the job identifying information and bibliographic information to the printing control apparatus 100a, requesting that it be saved in a bibliographic information holding unit 80a. As a result, in the printing control apparatus 100a, bibliographic management information 80D, which is received from the printing control apparatus 100b, is saved in the bibliographic information holding unit 80a.

For "without virtual address setting", the job managing unit 13b sets a network setting value "physical address" allocated to an own apparatus (printing control apparatus 100b) to an item value of server identifying information of a "bibliography" item of the bibliographic management information 80D. Moreover, the job managing unit 13b sets a character string value showing a data path to printing data to a field value of storage location information.

On the other hand, if it is determined that the network setting value ("a virtual address") is set (step S803b: YES), in the printing control apparatus 100b, the job managing unit 13b executes a process of storing printing data and bibliographic information for "without virtual address setting" (step S805b).

Here as well, the job managing unit 13b stores new printing data management information 90D including printing data in the printing data holding unit 90b, and transmits bibliographic management information 80D including bibliographic information to the printing control apparatus 100a, requesting that it be saved in the bibliographic information holding unit 80a. As a result, in the printing control apparatus 100a, bibliographic management information 80D, which is received from the printing control apparatus 100b, is saved in the bibliographic information holding unit 80a.

For "with virtual address setting", the job managing unit 13b sets a network setting value "virtual address" which is virtually allocated to the clustering environment aa a field value of server identifying information of a "bibliography" field of bibliographic management information 80D, and sets a character string value indicating a data path to printing data as a field value of storage location information.

In this way, in the present Variation 3, a job accepted from a user is accumulated to the printing control apparatus 100b, so that bibliographic information sets on jobs that include job identifying information which may be accessed externally are accumulated in a printing control apparatus 100a which unilaterally manages bibliographic information.

In this way, in the present Variation 3, even the printing control system 1 which adopts a clustering technique may execute a job selected on a job listing screen W by a user.

The technique proposed in the present Variation 3 is also applicable to the printing control system 1, which includes multiple interface apparatuses 107 such as an NIC (network interface card), etc., and to which the printing control apparatus 100 being allocated multiple network setting values is connected.

### Variation 4

For example, in the present Variation 4, a technique is proposed in which the user uses a display application such as a Web browser, etc., to delete accumulated jobs from a terminal 300.

### Job deletion process

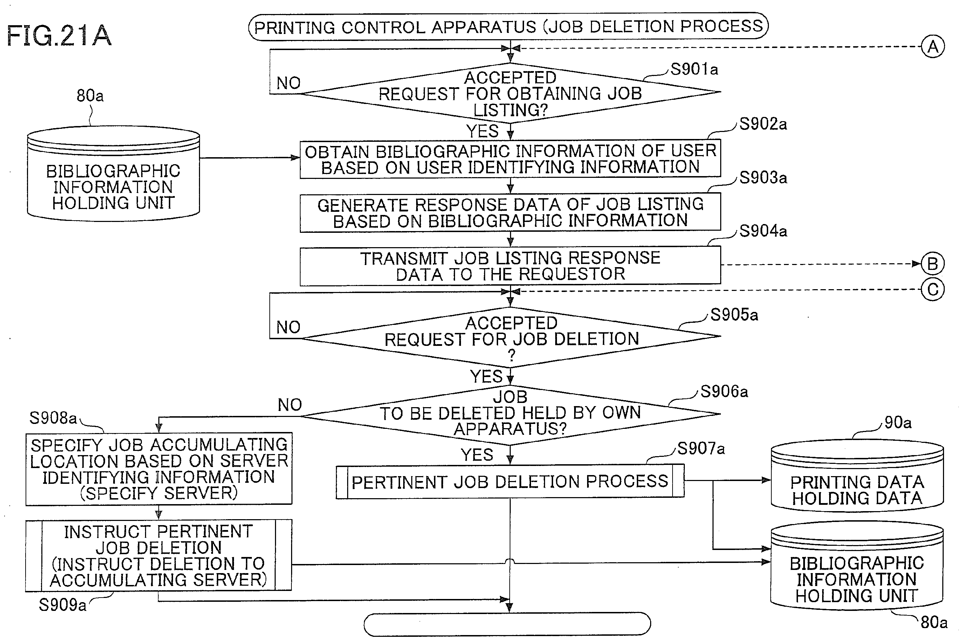

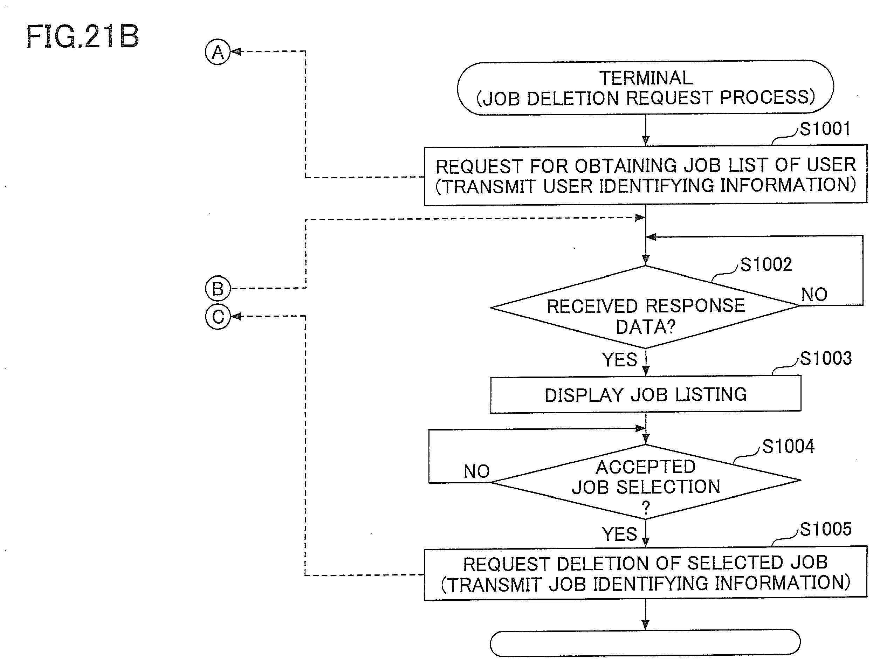

FIGS. 21A and 21B are flowcharts illustrating exemplary processing procedures for job deletion according to the present Variation 4. More specifically, it shows a job deletion request process in the terminal 300 and a job deletion process in the printing control apparatus 100a which unilaterally controls bibliographic information.

As shown in FIG. 21A, upon accepting an instruction requesting to obtain a job listing on a display application screen, execution of a process of obtaining the job listing of a user is requested of the printing control apparatus 100a (request accepting unit 14a) (step S1001). Then, the terminal 300 transmits process execution requesting data which includes user identifying information on a user to the printing control apparatus 100a.

Upon receiving them, in the printing control apparatus 100a, the request accepting unit 14a receives process execution request data transmitted from the terminal 300 and accepts a request for obtaining a job list of a user (step S901a: YES).

In the printing control apparatus 100a, based on user identifying information received at the time of accepting a request, the response data generating unit 16a specifies bibliographic management information 80D which corresponds to an accumulated job of a logged-in user that is held in the bibliographic information holding unit 80a, and obtains bibliographic information from the specified bibliographic management information 80D (step S902a).

In the printing control apparatus 100a, based on bibliographic information obtained, the response data generating unit 16a generates response data 16RD of a job listing based on bibliographic information obtained (step S903a).

In the printing control apparatus 100a, the request response unit 15a transmits request-originating terminal 300 response data 16RD of a job list generated and responds to a request for obtaining a job listing of a user (step S904a).

In response thereto, the terminal 300 receives the response data 16RD transmitted from the printing control apparatus 100a and accepts an obtaining process response of a job listing of a user (step S1002: YES).

As a result, based on the response data 16RD of the job listing received, the terminal 300 displays a job listing screen W on a display apparatus 102 (step S1003).

In this way, in the present Variation 3, in the terminal 300, a job listing screen W of all accumulated jobs of a user within the system 1 is displayed. In this way, the present embodiment may provide an operating environment which can select a job to be deleted.

The terminal 300 accepts a selection event of a job to be cancelled with an operation on the job listing screen W (step S1004). At this time, the terminal 300 accepts the selection event to accept an instruction which requests for deleting printing data of a job to be executed that is selected.

The terminal 300 requests execution of a process of deleting the printing data of a selected job to the printing control apparatus 100a (request accepting unit 14a) (step S1005). Then, the terminal 300 transmits process execution request data which include job identifying information on the selected job to the printing control apparatus 100a.

In response thereto, in the printing control apparatus 100a, the request accepting unit 14b receives the process execution request data transmitted from the terminal 300 and accepts a request for deleting printing data of the selected job (step S905a: YES).

In the printing control apparatus 100a, based on job identifying information received at the time of request acceptance, it is determined whether printing data of the job to be deleted are held by an own apparatus (printing control apparatus 100a) (step S906a).

When it is determined that printing data of a job to be deleted are held by an own apparatus (step S906a: YES), in the printing control apparatus 100a, the job managing unit 13a accesses the printing data holding unit 90a based on job identifying information. The job managing unit 13a specifies printing data management information 90D corresponding to the job to be deleted, and deletes the specified printing data management information 90D (including printing data) (step S907a). Then, based on the job identifying information, the job managing unit 13a accesses the bibliographic information holding unit 80a and specifies bibliographic management information 80D corresponding to the job to be deleted, and deletes the bibliographic management information 80D specified.

On the other hand, when it is determined that the printing data of the job to be deleted is not held by the own apparatus (step S906a:NO), in the printing control apparatus 100a, the job managing unit 13a accesses the bibliographic information holding unit 80a based on job identifying information. The job managing unit 13a specifies bibliographic management information 80D corresponding to the job to be deleted, and, based on server identifying information included in the specified bibliographic management information 80D, specifies a job accumulating location of a job to be deleted (step S908a).

The present process envisages a case such that a network setting value allocated to the printing control apparatus 100b is set in the job identifying information of the job to be deleted. In other words, a case is envisaged such than printing data of the job to be deleted are stored in the printing control apparatus 100b.

In the printing control apparatus 100a, the requesting unit 22 requests of a specified printing control apparatus 100b (request accepting unit 14b) that a process of deleting printing data of a job to be deleted be executed (step S909a). Then, the requesting unit 22 transmits process execution requesting data which includes job identifying information on a job to be deleted to the printing control apparatus 100b.

In this way, in the present Variation 4, in the terminal 300, selection of a job to be deleted is accepted via the job listing screen W, and the pertinent job is deleted from the printing control apparatus 1 specified with server identifying information of the selected job. In this way, the present Variation 4 makes it possible to provide a job deletion executing environment with a remote operation.

### Variation 5

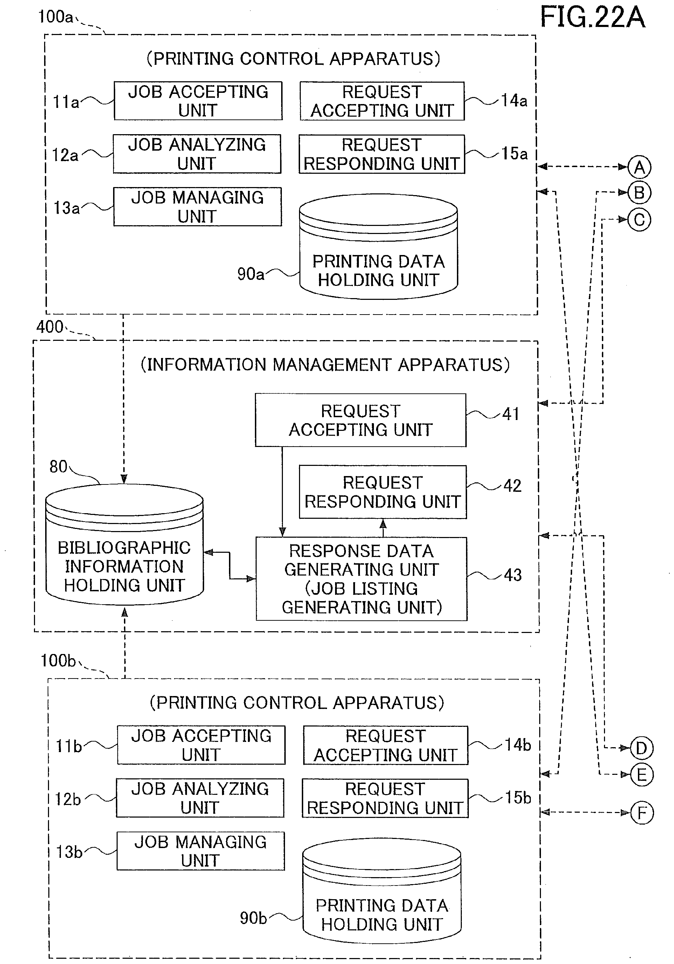

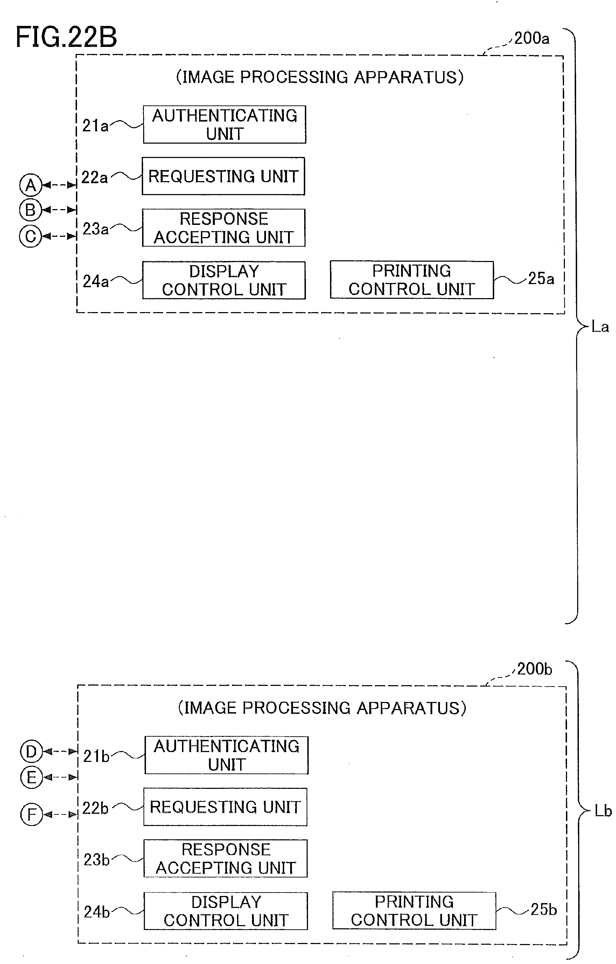

FIGS. 22A and 22B are diagrams showing an exemplary configuration of a printing control system 1 according to the present Variation 5.

In the above-described embodiments, a configuration of unilaterally managing bibliographic information by the printing control apparatus 100a is described, but it is not limited thereto. For example, as shown in FIG. 22A,
bibliographic information may be unilaterally managed by an information management apparatus 400, which is different from the printing control apparatus 100. In this case, the information management apparatus 400 includes a request accepting unit 41, a request responding unit 42, a response data generating unit 43, and a bibliographic information holding unit 80.

In the printing control system 1 according to the present Variation 5, the above-described job accumulation and job listing provision processes are executed as follows.

### Job accumulation process

When a job from a user is accepted from the terminal 300, the printing control apparatus 100 collates received printing data with job identifying information to store the collated results as new printing data management information 90D in a printing data holding unit 90 included in an own apparatus (printing control apparatuses 100a, 100b). Here, the job control unit 100 transmits new bibliographic management information 80D collated with the job identifying information and bibliographic information to the information management apparatus 400, requesting that it be saved in a bibliographic information holding unit 80.

### Job listing provision process

When a request for obtaining job listing information is accepted from the image processing apparatus 200, based on user identifying information included in process execution request data received, the information management apparatus 400 accesses the bibliographic information holding unit 80, and generates response data of a job listing from bibliographic information obtained from the bibliographic management information 80D specified. The information management apparatus 400 transmits generated response data to the request-originating image processing apparatus 200 and responds to a request for obtaining job listing information.

In this way, even the printing control system 1 according to the present Variation 5 makes it possible to effect the same advantage as that of the above-described embodiments.

Finally, the present invention is not limited to requirements shown herein such as a shape, a configuration, a combination thereof with the other elements, etc. These matters can be changed without compromising the spirit of the present invention, so that they may be determined according to applicable embodiments thereof.

The present application is based on Japanese Priority Application No. 2011-105529 filed on May 10, 2011.

## Claims

1. A control apparatus (100) of a plurality of control apparatuses, the control apparatus including a job holding unit which accumulates and holds a job in a predetermined storage area, each of the plurality of control apparatuses being connected, via a predetermined data transmission path, with a processing apparatus (200) which executes the job held by the job holding unit, the control apparatus comprising:
a request accepting unit (14) which accepts a processing request from the processing apparatus;
a response data generating unit (16) which generates response data of the processing request based on results of processing executed in response to the processing request; and
a request responding unit (15) which transmits the response data to the processing apparatus and responds to the accepted processing request, **characterized in that,**
upon the request accepting unit (14) accepting a job listing obtaining request from the processing apparatus, the response data generating unit obtains bibliographic information corresponding to a job of a user from a bibliographic information holding unit (80) which holds multiple bibliographic information sets in order to unilaterally manage the multiple bibliographic information sets corresponding to all jobs including the job held by the control apparatus and jobs held by other control apparatuses of the plurality of control apparatuses, and, based on the obtained bibliographic information, generates job listing response data which include job accumulating location specifying information for specifying job accumulating location, and
the request responding unit (15) transmits the generated job listing response data to the processing apparatus and responds to the job listing obtaining request,
the control apparatus further comprising:
a job analyzing unit (12) which analyzes a job received when accepting a job accumulating request; and
a job managing unit (13) which manages data of the job accumulated based on the analyzed results, wherein,
upon the job analyzing unit obtaining analyzed results including job data of the received job and bibliographic information on the received job, the job managing unit stores, in the bibliographic information holding unit (80), bibliographic management information in which the bibliographic information is collated with job identifying information which identifies the received job, and
stores, in the job holding unit, job management information in which the job identifying information and the job data are collated.

2. The control apparatus (100) as claimed in claim 1,
wherein the job managing unit
stores, in the bibliographic information holding unit (80), the bibliographic management information, in which the job accumulating location specifying information is set as the bibliographic information, including apparatus identifying information which identifies the control apparatus which has the job holding unit in which the job data of the received job are stored.

3. The control apparatus (100) as claimed in claim 2,
the response data generating unit (16) specifies bibliographic management information corresponding to the job of the user and generates the job listing response data which include the job accumulating location specifying information based on the storage location information and the apparatus identifying information that are set in the specified bibliographic management information.

4. The control apparatus (100) as claimed in claim 2, further comprising:
an operation checking unit which checks an operation of control apparatuses including the control apparatus and the other control apparatuses, wherein the operation checking unit checks an operating status of the pertinent control apparatus based on the apparatus identifying information set in the bibliographic management information specified by the response data generating unit, and wherein the response data generating unit checks for a normal operation based on results of operation checking by the operation checking unit and generates response data of the job listing based on bibliographic information corresponding to a job held by the control apparatus which can obtain a job from the processing apparatus.

5. The control apparatus (100) as claimed in claim 2, wherein,
upon the request accepting unit (14) accepting a job obtaining request from the processing apparatus, the job managing unit
obtains pertinent job data from the job holding unit which the control apparatus has based on the storage location information received when the job obtaining request is accepted, and
the request responding unit (15) transmits obtained job data to the processing apparatus, responding to the job obtaining request.

6. The control apparatus (100) as claimed in claim 1,
wherein the response data generating unit
generates the job listing response data based on the bibliographic information corresponding to an accumulated job held by one or multiple control apparatuses set in advance, of control apparatuses including the control apparatus and the other control apparatuses.

7. A control method in a control apparatus of a plurality of control apparatuses, the control apparatus including a job holding unit which accumulates and holds a job in a predetermined storage area, each of the plurality of control apparatuses being connected, via a predetermined data transmission path, with a processing apparatus (200) which executes the job held by the job holding unit, the control method comprising:
a request accepting step which accepts a processing request from the processing apparatus;
a response data generating step which generates response data of the processing request based on results of processing executed in response to the processing request; and
a request responding step which transmits the response data to the processing apparatus and responds to the accepted processing request, **characterized in that,**
upon the request accepting step accepting a job listing obtaining request from the processing apparatus, the response data generating step obtains bibliographic information corresponding to a job of a user from a bibliographic information holding unit (80) which holds multiple bibliographic information sets in order to unilaterally manage the multiple bibliographic information sets corresponding to all jobs including the job held by the control apparatus and jobs held by other control apparatuses of the plurality of control apparatuses, and, based on the obtained bibliographic information, generates job listing response data which include job accumulating location specifying information for specifying job accumulating location, and the request responding step transmits the generated job listing response data to the processing apparatus and responds to the job listing obtaining request,
the control method further comprising:
a job analyzing step which analyzes a job received when accepting a job accumulating request; and
a job managing step which manages data of the job accumulated based on the analyzed results, wherein,
upon the job analyzing step obtaining analyzed results including job data of the received job and bibliographic information on the received job, the job managing step stores, in the bibliographic information holding unit (80), bibliographic management information in which the bibliographic information is collated with job identifying information which identifies the received job, and
stores, in the job holding unit, job management information in which the job identifying information and the job data are collated.

8. The control method as claimed in claim 7,
wherein the job managing step
stores, in the bibliographic information holding unit (80), the bibliographic management information, in which the job accumulating location specifying information is set as the bibliographic information, including apparatus identifying information which identifies the control apparatus which has the job holding unit in which the job data of the received job are stored.

9. The control method as claimed in claim 8,
the response data generating step specifies bibliographic management information corresponding to the job of the user and generates the job listing response data which include the job accumulating location specifying information based on the storage location information and the apparatus identifying information that are set in the specified bibliographic management information.

10. The control method as claimed in claim 8, further comprising:
an operation checking step which checks an operation of control apparatuses including the control apparatus and the other control apparatuses, wherein the operation checking step checks an operating status of the pertinent control apparatus based on the apparatus identifying information set in the bibliographic management information specified by the response data generating unit, and wherein the response data generating step, and
checks for a normal operation based on results of operation checking by the operation checking step and generates response data of the job listing based on bibliographic information corresponding to a job held by the control apparatus which can obtain a job from the processing apparatus.

11. The control method as claimed in claim 8, wherein,
upon the request accepting step accepting a job obtaining request from the processing apparatus, the job managing step
obtains pertinent job data from the job holding unit which the control apparatus has based on the storage location information received when the job obtaining request is accepted, and
the request responding step transmits obtained job data to the processing apparatus, responding to the job obtaining request.

12. The control method as claimed in claim 7,
wherein the response data generating step
generates the job listing response data based on the bibliographic information corresponding to an accumulated job held by one or multiple control apparatuses set in advance, of control apparatuses including the control apparatus and the other control apparatuses.

13. A control system (1), comprising:
a control apparatus (100) of a plurality of control apparatuses, the control apparatus including a job holding unit which accumulates and holds a job in a predetermined storage area, each of the plurality of control apparatuses being connected via a predetermined data transmission path with a processing apparatus (200) which executes the job held by the job holding unit,
the control apparatus including
a request accepting unit (14) which accepts a processing request from the processing apparatus;
a response data generating unit (16) which generates response data of the processing request based on results of processing executed in response to the processing request; and
a request responding unit (15) which transmits the response data to the processing apparatus and responds to the accepted processing request, the processing apparatus including:
a requesting unit which requests a predetermined processing by the control apparatus; and a response accepting unit which accepts a response to the processing request from the control apparatus, **characterized in that,**
in the processing apparatus, the requesting unit makes a job listing obtaining request, and in the control apparatus (100), upon the request accepting unit (14) accepting a job listing obtaining request from the processing apparatus, the response data generating unit obtains bibliographic information corresponding to a job of a user from a bibliographic information holding unit (80) which holds multiple bibliographic information sets in order to unilaterally manage the multiple bibliographic information sets corresponding to all jobs including the job held by the control apparatus and jobs held by other control apparatuses of the plurality of control apparatuses, and, based on the obtained bibliographic information, generates job listing response data which include job accumulating location specifying information for specifying a job accumulating location, and the request responding unit (15) transmits the generated job listing response data to the processing apparatus and responds to the job listing obtaining request, the control apparatus further comprising: a job analyzing unit which analyzes a job received when accepting a job accumulating request; and a job managing unit which manages data of the job accumulated based on the analyzed results, wherein, upon the job analyzing unit obtaining analyzed results including job data of the received job and bibliographic information on the received job, the job managing unit stores, in the bibliographic information holding unit (80), bibliographic management information in which the bibliographic information is collated with job identifying information which identifies the received job, and stores, in the job holding unit, job management information in which the job identifying information and the job data are collated, and, in the processing apparatus, upon the response accepting unit accepting a response to the job listing obtaining request from the control apparatus, a job listing screen of a user is displayed based on the job listing response data received when the response is accepted.

## Patentansprüche

1. Steuervorrichtung (100) von mehreren Steuervorrichtungen, wobei die Steuervorrichtung eine Auftragshalteeinheit enthält, die einen Auftrag in einem vorgegebenen Speicherbereich ansammelt und hält, wobei jede der mehreren Steuervorrichtungen über einen vorgegebenen Datensendeweg mit einer Verarbeitungsvorrichtung (200) verbunden ist, die den durch die Auftragshalteeinheit gehaltenen Auftrag ausführt, wobei die Steuervorrichtung umfasst:
eine Anforderungsannahmeeinheit (14), die eine Verarbeitungsanforderung von der Verarbeitungsvorrichtung annimmt;
eine Antwortdatenerzeugungseinheit (16), die Antwortdaten der Verarbeitungsanforderung anhand von Ergebnissen der als Reaktion auf die Verarbeitungsanforderung ausgeführten Verarbeitung erzeugt; und
eine Anforderungsantworteinheit (15), die die Antwortdaten an die Verarbeitungsvorrichtung sendet und auf die angenommene Verarbeitungsanforderung antwortet, **dadurch gekennzeichnet, dass**
dann, wenn die Anforderungsannahmeeinheit (14) eine Auftragsauflistungserlangungsanforderung von der Verarbeitungsvorrichtung annimmt, die Antwortdatenerzeugungseinheit bibliografische Informationen, die einem Auftrag eines Anwenders entsprechen, von einer Halteeinheit für bibliografische Informationen (80) erlangt, die mehrere bibliografische Informationsgruppen hält, um die mehreren bibliografischen Informationen, die allen Aufträgen entsprechen, die den durch die Steuervorrichtung gehaltenen Auftrag und die durch andere Steuervorrichtungen der mehreren Steuervorrichtungen gehaltenen Aufträge enthalten, unilateral zu managen, und anhand der erlangten bibliografischen Informationen Auftragsauflistungsantwortdaten erzeugt, die Informationen, die den Auftragsansammlungsort spezifizieren, enthalten, um den Auftragsansammlungsort zu spezifizieren, und
die Anforderungsantworteinheit (15) die erzeugten Auftragsauflistungsantwortdaten an die Verarbeitungsvorrichtung sendet und auf die Auftragsauflistungserlangungsanforderung antwortet,
wobei die Steuervorrichtung ferner umfasst:
eine Auftragsanalyseeinheit (12), die einen Auftrag analysiert, der empfangen wird, wenn eine Auftragsansammlungsanforderung angenommen wird; und
eine Auftragsmanagementeinheit (13), die Daten des angesammelten Auftrags anhand der analysierten Ergebnisse managt, wobei
dann, wenn die Auftragsanalyseeinheit analysierte Ergebnisse erlangt, die Auftragsdaten des empfangenen Auftrags und bibliografische Informationen über den empfangenen Auftrag angeben, die Auftragsmanagementeinheit in der Halteeinheit für bibliografische Informationen (80) bibliografische Managementinformationen speichert, in denen die bibliografischen Informationen mit Auftragsidentifikationsinformationen, die den empfangenen Auftrag identifizieren, vereinigt sind, und
in der Auftragshalteeinheit Auftragsmanagementinformationen speichert, in denen die Auftragsidentifikationsinformationen und die Auftragsdaten vereinigt sind.

2. Steuervorrichtung (100) nach Anspruch 1,
wobei die Auftragsmanagementeinheit in der Halteeinheit für bibliografische Informationen (80) die bibliografischen Managementinformationen, in denen die Informationen, die den Auftragsansammlungsort spezifizieren, als die bibliografischen Informationen eingestellt sind, einschließlich der Vorrichtungsidentifikationsinformationen, die die Steuervorrichtung identifizieren, die die Auftragshalteeinheit besitzt, in der die Auftragsdaten des empfangenen Auftrags gespeichert sind, speichert.

3. Steuervorrichtung (100) nach Anspruch 2,
wobei die Antwortdatenerzeugungseinheit (16) bibliografische Managementinformationen spezifiziert, die dem Auftrag des Anwenders entsprechen, und die Auftragsauflistungsantwortdaten, die die Informationen, die den Auftragsansammlungsort spezifizieren, enthalten, anhand der Speicherortinformationen und der Vorrichtungsidentifikationsinformationen, die in den spezifizierten bibliografischen Managementinformationen enthalten sind, erzeugt.

4. Steuervorrichtung (100) nach Anspruch 2, die ferner umfasst:
eine Betriebsüberprüfungseinheit, die einen Betrieb von Steuervorrichtungen, die die Steuervorrichtung und die anderen Steuervorrichtungen enthalten, überprüft, wobei die Betriebsüberprüfungseinheit einen Betriebszustand der relevanten Steuervorrichtung anhand der Vorrichtungsidentifikationsinformationen, die in den bibliografischen Managementinformationen eingestellt sind, die durch die Antwortdatenerzeugungseinheit spezifiziert sind, überprüft, und wobei die Antwortdatenerzeugungseinheit einen normalen Betrieb anhand von Ergebnissen der Betriebsüberprüfung durch die Betriebsüberprüfungseinheit überprüft und Antwortdaten der Auftragsauflistung anhand von bibliografischen Informationen, die einem durch die Steuervorrichtung, die einen Auftrag von der Verarbeitungsvorrichtung erhalten kann, gehaltenen Auftrag entsprechen, erzeugt.

5. Steuervorrichtung (100) nach Anspruch 2, wobei
dann, wenn die Anforderungsannahmeeinheit (14) eine Auftragserlangungsanforderung von der Verarbeitungsvorrichtung annimmt, die Auftragsmanagementeinheit relevante Auftragsdaten, die die Steuervorrichtung besitzt, anhand der Speicherortinformationen, die empfangen werden, wenn die Auftragserlangungsanforderung angenommen wird, von der Auftragshalteeinheit erlangt und die Anforderungsantworteinheit (15) erlangte Auftragsdaten an die Verarbeitungsvorrichtung sendet, indem sie auf die Auftragserlangungsanforderung antwortet.

6. Steuervorrichtung (100) nach Anspruch 1,
wobei die Antwortdatenerzeugungseinheit die Auftragsauflistungsantwortdaten anhand der bibliografischen Informationen erzeugt, die einem angesammelten Auftrag entsprechen, der durch eine oder mehrere Steuervorrichtungen, die im Voraus eingestellt werden, von Steuervorrichtungen, die die Steuervorrichtung und die anderen Steuervorrichtungen enthalten, gehalten wird.

7. Steuerverfahren in einer Steuervorrichtung von mehreren Steuervorrichtungen, wobei die Steuervorrichtung eine Auftragshalteeinheit enthält, die einen Auftrag in einem vorgegebenen Speicherbereich ansammelt und hält, wobei jede der mehreren Steuervorrichtungen über einen vorgegebenen Datensendeweg mit einer Verarbeitungsvorrichtung (200) verbunden ist, die den durch die Auftragshalteeinheit gehaltenen Auftrag ausführt, wobei das Steuerverfahren umfasst:
einen Anforderungsannahmeschritt, der eine Verarbeitungsanforderung von der Verarbeitungsvorrichtung annimmt;
einen Antwortdatenerzeugungsschritt, der Antwortdaten der Verarbeitungsanforderung anhand von Ergebnissen der als Reaktion auf die Verarbeitungsanforderung ausgeführten Verarbeitung erzeugt; und
einen Anforderungsantwortschritt, der die Antwortdaten an die Verarbeitungsvorrichtung sendet und auf die angenommene Verarbeitungsanforderung antwortet, **dadurch gekennzeichnet, dass**
dann, wenn der Anforderungsannahmeschritt eine Auftragsauflistungserlangungsanforderung von der Verarbeitungsvorrichtung annimmt, der Antwortdatenerzeugungsschritt bibliografische Informationen, die einem Auftrag eines Anwenders entsprechen, von einer Halteeinheit für bibliografische Informationen (80) erlangt, die mehrere bibliografische Informationsgruppen hält, um die mehreren bibliografischen Informationsgruppen, die allen Aufträgen, die den durch die Steuervorrichtung gehaltenen Auftrag und die durch andere Steuervorrichtungen der mehreren Steuervorrichtungen gehaltenen Aufträge enthalten, entsprechen, unilateral zu managen und anhand der erlangten bibliografischen Informationen Auftragsauflistungsantwortdaten erzeugt, die Informationen, die den Auftragsansammlungsort spezifizieren, enthalten, um den Auftragsansammlungsort zu spezifizieren, und der Anforderungsantwortschritt die erzeugten Auftragsauflistungsantwortdaten an die Verarbeitungsvorrichtung sendet und auf die Auftragsauflistungserlangungsanforderung antwortet,
wobei das Steuerverfahren ferner umfasst:
einen Auftragsanalyseschritt, der einen Auftrag analysiert, der empfangen wird, wenn eine Auftragsansammlungsanforderung angenommen wird; und
einen Auftragsmanagementschritt, der Daten des angesammelten Auftrags anhand der analysierten Ergebnisse managt, wobei
dann, wenn der Auftragsanalyseschritt analysierte Ergebnisse erlangt, die Auftragsdaten des empfangenen Auftrags und bibliografische Informationen über den empfangenen Auftrag angeben, der Auftragsmanagementschritt in der Halteeinheit für bibliografische Informationen (80) bibliografische Managementinformationen speichert, in denen die bibliografischen Informationen mit Auftragsidentifikationsinformationen, die den empfangenen Auftrag identifizieren, vereinigt sind, und
in der Auftragshalteeinheit Auftragsmanagementinformationen speichert, in denen die Auftragsidentifikationsinformationen und die Auftragsdaten vereinigt sind.

8. Steuerverfahren nach Anspruch 7,
wobei der Auftragsmanagementschritt in der Halteeinheit für bibliografische Informationen (80) die bibliografischen Managementinformationen, in denen die Informationen, die den Auftragsansammlungsort spezifizieren, als die bibliografischen Informationen eingestellt sind, einschließlich der Vorrichtungsidentifikationsinformationen, die die Steuervorrichtung identifizieren, die die Auftragshalteeinheit besitzt, in der die Auftragsdaten des empfangenen Auftrags gespeichert sind, speichert.

9. Steuerverfahren nach Anspruch 8,
wobei der Antwortdatenerzeugungsschritt bibliografische Managementinformationen spezifiziert, die dem Auftrag des Anwenders entsprechen, und die Auftragsauflistungsantwortdaten, die die Informationen enthalten, die den Auftragsansammlungsort spezifizieren, anhand der Speicherortinformationen und der Vorrichtungsidentifikationsinformationen, die in den spezifizierten bibliografischen Managementinformationen eingestellt sind, erzeugt.

10. Steuerverfahren nach Anspruch 8, das ferner umfasst:
einen Betriebsüberprüfungsschritt, der einen Betrieb von Steuervorrichtungen, die die Steuervorrichtung und die anderen Steuervorrichtungen enthalten, überprüft, wobei der Betriebsüberprüfungsschritt einen Betriebszustand der relevanten Steuervorrichtung anhand der in den bibliografischen Managementinformationen, die durch die Antwortdatenerzeugungseinheit spezifiziert sind, eingestellten Vorrichtungsidentifikationsinformationen überprüft und wobei der Antwortdatenerzeugungsschritt und einen normalen Betrieb anhand von Ergebnissen der Betriebsüberprüfung durch den Betriebsüberprüfungsschritt überprüft und Antwortdaten der Auftragsauflistung anhand von bibliografischen Informationen, die einem Auftrag entsprechen, der durch die Steuervorrichtung gehalten wird, die einen Auftrag von der Verarbeitungsvorrichtung erhalten kann, erzeugt.

11. Steuerverfahren nach Anspruch 8, wobei
dann, wenn der Anforderungsannahmeschritt eine Auftragserlangungsanforderung von der Verarbeitungsvorrichtung annimmt, der Auftragsmanagementschritt
relevante Auftragsdaten von der Auftragshalteeinheit, die die Steuervorrichtung besitzt, anhand der Speicherortinformationen, die empfangen werden, wenn die Auftragserlangungsanforderung angenommen wird, erlangt und der Anforderungsantwortschritt erlangte Auftragsdaten an die Verarbeitungsvorrichtung sendet, indem sie auf die Auftragserlangungsanforderung antwortet.

12. Steuerverfahren nach Anspruch 7,
wobei der Antwortdatenerzeugungsschritt die Auftragsauflistungsantwortdaten anhand der bibliografischen Informationen erzeugt, die einem angesammelten Auftrag entsprechen, der durch eine oder mehrere Steuervorrichtungen, die im Voraus eingestellt werden, von Steuervorrichtungen, die die Steuervorrichtung und die anderen Steuervorrichtungen enthalten, gehalten wird.

13. Steuersystem (1), das umfasst:
eine Steuervorrichtung (100) von mehreren Steuervorrichtungen, wobei die Steuervorrichtung eine Auftragshalteeinheit enthält, die einen Auftrag in einem vorgegebenen Speicherbereich ansammelt und hält, wobei jede der mehreren Steuervorrichtungen über einen vorgegebenen Datensendeweg mit einer Verarbeitungsvorrichtung (200) verbunden ist, die den durch die Auftragshalteeinheit gehaltenen Auftrag ausführt, wobei die Steuervorrichtung enthält:
eine Anforderungsannahmeeinheit (14), die eine Verarbeitungsanforderung von der Verarbeitungsvorrichtung annimmt;
eine Antworterzeugungseinheit (16), die Antwortdaten der Verarbeitungsanforderung anhand von Ergebnissen der als Reaktion auf die Verarbeitungsanforderung ausgeführten Verarbeitung erzeugt; und
eine Anforderungsantworteinheit (15), die die Antwortdaten an die Verarbeitungsvorrichtung sendet und auf die angenommene Verarbeitungsanforderung antwortet, wobei die Verarbeitungsvorrichtung enthält:
eine Anforderungseinheit, die eine vorgegebene Verarbeitung durch die Steuervorrichtung anfordert; und eine
Antwortannahmeeinheit, die eine Antwort der Verarbeitungsanforderung von der Steuervorrichtung annimmt, **dadurch gekennzeichnet, dass**
in der Verarbeitungsvorrichtung die Anforderungseinheit eine Auftragsauflistungserlangungsanforderung ausführt, und in der Steuervorrichtung (100) dann, wenn die Anforderungsannahmeeinheit (14) eine Auftragsauflistungserlangungsanforderung von der Verarbeitungsvorrichtung annimmt, die Antwortdatenerzeugungseinheit bibliografische Informationen, die einem Auftrag eines Anwenders entsprechen, von einer Halteeinheit für bibliografische Informationen (80) erlangt, die mehrere bibliografische Informationsgruppen hält, um die mehreren bibliografischen Informationen, die allen Aufträgen, die den durch die Steuervorrichtung gehaltenen Auftrag und die durch andere Steuervorrichtungen der mehreren Steuervorrichtungen gehaltenen Aufträge enthalten, entsprechen, unilateral zu managen, und anhand der erlangten bibliografischen Informationen Auftragsauflistungsantwortdaten erzeugt, die Informationen, die den Auftragsansammlungsort spezifizieren, enthalten, um den Auftragsansammlungsort zu spezifizieren, und
die Anforderungsantworteinheit (15) die erzeugten Auftragsauflistungsantwortdaten an die Verarbeitungsvorrichtung sendet und auf die Auftragsauflistungserlangungsanforderung antwortet, wobei die Steuervorrichtung ferner umfasst: eine Auftragsanalyseeinheit (12), die einen Auftrag analysiert, der empfangen wird, wenn eine Auftragsansammlungsanforderung angenommen wird; und eine Auftragsmanagementeinheit (13), die Daten des angesammelten Auftrags anhand der analysierten Ergebnisse managt, wobei dann, wenn die Auftragsanalyseeinheit analysierte Ergebnisse erlangt, die Auftragsdaten des empfangenen Auftrags und bibliografische Informationen über den empfangenen Auftrag angeben, die Auftragsmanagementeinheit in der Halteeinheit für bibliografische Informationen (80) bibliografische Managementinformationen speichert, in denen die bibliografischen Informationen mit Auftragsidentifikationsinformationen, die den empfangenen Auftrag identifizieren, vereinigt sind, und in der Auftragshalteeinheit Auftragsmanagementinformationen speichert, in denen die Auftragsidentifikationsinformationen und die Auftragsdaten vereinigt sind, und
in der Verarbeitungsvorrichtung dann, wenn die Antwortannahmeeinheit eine Antwort auf die Auftragsauflistungserlangungsanforderung von der Steuervorrichtung annimmt, ein Auftragsauflistungsbildschirm eines Anwenders anhand der Auftragsauflistungsantwortdaten, die empfangen werden, wenn die Antwort angenommen wird, angezeigt wird.

## Revendications

1. Appareil de commande (100) parmi une pluralité d'appareils de commande, l'appareil de commande comprenant une unité de stockage de tâche qui accumule et stocke une tâche dans une zone de stockage prédéterminée, chacun de la pluralité d'appareils de commande étant connecté via un chemin de transmission de données prédéterminé avec un appareil de traitement (200) qui exécute la tâche stockée par l'unité de stockage de tâches, l'appareil de commande comprenant :
une unité d'acceptation de demande (14) qui accepte une demande de traitement de l'appareil de traitement ;
une unité de génération de données de réponse (16) qui génère des données de réponse à la demande de traitement en se fondant sur des résultats du traitement exécuté en réponse à la demande de traitement ; et
une unité de réponse à une demande (15) qui transmet les données de réponse à l'appareil de traitement et répond à la demande de traitement acceptée, **caractérisé en ce que** lorsque l'unité d'acceptation de demande (14) accepte une demande d'obtention de liste de tâches en provenance de l'appareil de traitement, l'unité de génération de données de réponse obtient des informations bibliographiques correspondant à une tâche d'un utilisateur à partir d'une unité de stockage d'informations bibliographiques (80) qui stocke plusieurs ensembles d'informations bibliographiques afin de gérer unilatéralement les ensembles d'informations bibliographiques correspondant à toutes les tâches, y compris la tâche stockée par l'appareil de commande et des tâches stockées par d'autres appareils de commande parmi la pluralité d'appareils de commande, et, en se fondant sur les informations bibliographiques obtenues,
génère des données de réponse de liste de tâches qui incluent une information spécifiant un emplacement d'accumulation de tâches pour spécifier un emplacement d'accumulation de tâches, et
l'unité de réponse à la demande (15) transmet les données de réponse de liste de tâches à l'appareil de traitement et répond à la demande d'obtention de liste de tâches,
l'appareil de commande comprenant en outre :
une unité d'analyse de tâche (12) qui analyse une tâche reçue lorsqu'une demande d'accumulation de tâches est acceptée ; et
une unité de gestion de tâches (13) qui gère les données de la tâche accumulée en se fondant sur les résultats analysés, où
lorsque l'unité d'analyse de tâches obtient des résultats analysés incluant des données de tâche de la tâche reçue et des informations bibliographiques sur la tâche reçue, l'unité de gestion de tâche stocke dans l'unité de stockage d'informations bibliographiques (80) des informations de gestion bibliographiques dans lesquelles les informations bibliographiques sont collationnées avec des informations d'identification de tâche qui identifient la tâche reçue, et
stocke, dans l'unité de stockage de tâche, des informations de gestion de tâche dans lesquelles sont collationnées les informations d'identification de tâche et les données de tâche.

2. Appareil de commande (100) selon la revendication 1,
où l'unité de gestion de tâche stocke dans l'unité de stockage d'informations bibliographiques (80) les informations de gestion bibliographiques, où l'information spécifiant l'emplacement d'accumulation des tâches est définie comme étant l'information bibliographique comprenant l'information d'identification d'appareil qui identifie l'appareil de commande qui comporte l'unité de stockage de tâche dans laquelle sont stockées les données de tâche de la tâche reçue.

3. Appareil de commande (100) selon la revendication 2, où
l'unité de génération de données de réponse (16) spécifie les informations de gestion bibliographiques qui correspondent à la tâche de l'utilisateur et génère des données de réponse de liste de tâches qui incluent l'information spécifiant l'emplacement d'accumulation des tâches en se fondant sur des informations d'emplacement de stockage et des informations d'identification d'appareil qui sont définies dans les informations de gestion bibliographique spécifiées.

4. Appareil de commande (100) selon la revendication 2, comprenant en outre :
une unité de vérification de fonctionnement qui vérifie le fonctionnement d'appareils de commande comprenant l'appareil de commande et les autres appareils de commande, où l'unité de vérification de fonctionnement vérifie un état de fonctionnement de l'appareil de commande concerné en se fondant sur les informations d'identification d'appareil définies dans les informations de gestion bibliographiques spécifiées par l'unité de génération de données de réponse, et où l'unité de génération de données de réponse vérifie la présence d'un fonctionnement normal en se fondant des résultats d'une vérification de fonctionnement réalisée par l'unité de vérification de fonctionnement et génère les données de réponse de la liste de tâches en se fondant sur les données bibliographiques correspondant à une tâche stockée par l'appareil de commande qui peut obtenir une tâche auprès de l'appareil de traitement.

5. Appareil de commande (100) selon la revendication 2, où
lorsque l'unité d'acceptation de demande (14) accepte une demande d'obtention de tâche en provenance de l'appareil de traitement, l'unité de traitement de tâche obtient des données de tâche pertinentes auprès de l'unité de stockage de tâches contenue dans l'appareil de commande, en se fondant sur les informations d'emplacement de stockage reçues lorsque la demande d'obtention de tâche est acceptée, et l'unité de réponse à la demande (15) transmet des données de tâche obtenues à l'appareil de traitement répondant ainsi à la demande d'obtention de tâche.

6. Appareil de commande (100) selon la revendication 1,
où l'unité de génération de données de réponse génère les données de réponse de liste de tâches en se fondant sur les informations bibliographiques correspondant à une tâche accumulée détenue par un ou plusieurs appareils de commande prédéfinis parmi les appareils de commande comprenant l'appareil de commande et les autres appareils de commande.

7. Procédé de commande dans un appareil de commande parmi une pluralité d'appareils de commande, l'appareil de commande comprenant une unité de stockage de tâche qui accumule et stocke une tâche dans une zone de stockage prédéterminée, chacun de la pluralité d'appareils de commande étant connecté via un chemin de transmission de données prédéterminé avec un appareil de traitement (200) qui exécute la tâche stockée par l'unité de stockage de tâches, le procédé de commande comprenant :
une étape d'acceptation de demande qui consiste à accepter une demande de traitement de l'appareil de traitement ;
une étape de génération de données de réponse qui consiste à générer des données de réponse à la demande de traitement en se fondant sur des résultats du traitement exécuté en réponse à la demande de traitement ; et
une étape de réponse à une demande qui consiste à transmettre les données de réponse à l'appareil de traitement et à répondre à la demande de traitement acceptée, **caractérisé en ce que** lorsqu'une demande d'obtention de liste de tâches est acceptée en provenance de l'appareil de traitement lors de l'étape d'acceptation de demande, l'étape de génération de données de réponse consiste à obtenir des informations bibliographiques correspondant à une tâche d'un utilisateur à partir d'une unité de stockage d'informations bibliographiques (80) qui stocke plusieurs ensembles d'informations bibliographiques afin de gérer unilatéralement les ensembles d'informations bibliographiques correspondant à toutes les tâches, y compris la tâche stockée par l'appareil de commande et des tâches stockées par d'autres appareils de commande parmi la pluralité d'appareils de commande, et, en se fondant sur les informations bibliographiques obtenues, à générer des données de réponse de liste de tâches qui incluent une information spécifiant un emplacement d'accumulation de tâches pour spécifier un emplacement d'accumulation de tâches, et l'étape de réponse à la demande consiste à transmettre les données de réponse de liste de tâches générées à l'appareil de traitement et à répondre à la demande d'obtention de liste de tâches,
le procédé de commande comprenant en outre :
une étape d'analyse de tâche qui consiste à analyser une tâche reçue lorsqu'une demande d'accumulation de tâches est acceptée ; et
une étape de gestion de tâches qui consiste à gérer les données de la tâche accumulée en se fondant sur les résultats analysés, où
lorsque des résultats analysés incluant des données de tâche de la tâche reçue et des informations bibliographiques sur la tâche reçue sont obtenues lors de l'étape d'analyse de tâches, l'étape de gestion de tâche consiste à stocker dans l'unité de stockage d'informations bibliographiques (80) des informations de gestion bibliographiques dans lesquelles les informations bibliographiques sont collationnées avec des informations d'identification de tâche qui identifient la tâche reçue, et
à stocker, dans l'unité de stockage de tâche, des informations de gestion de tâche dans lesquelles sont collationnées les informations d'identification de tâche et le données de tâche.

8. Procédé de commande selon la revendication 7,
où l'étape de gestion de tâches consiste à stocker, dans l'unité de stockage d'informations bibliographiques (80), les informations de gestion bibliographiques, où les informations spécifiant l'emplacement d'accumulation des tâches sont définies comme étant l'information bibliographique, y compris l'information d'identification d'appareil qui identifie l'appareil de commande qui comporte l'unité de stockage de tâches dans laquelle sont stockées les données de tâche de la tâche reçue.

9. Procédé de commande selon la revendication 8,
où l'étape de génération de données de réponse consiste à spécifier les informations de gestion bibliographiques qui correspondent à la tâche de l'utilisateur et à générer des données de réponse de liste de tâches qui incluent l'information spécifiant l'emplacement d'accumulation des tâches en se fondant sur des informations d'emplacement de stockage et des informations d'identification d'appareil qui sont définies dans les informations de gestion bibliographique spécifiées.

10. Procédé de commande selon la revendication 8, comprenant en outre :
une étape de vérification de fonctionnement qui consiste à vérifier un fonctionnement d'appareils de commande comprenant l'appareil de commande et les autres appareils de commande, où l'étape de vérification de fonctionnement consiste à vérifier un état de fonctionnement de l'appareil de commande concerné en se fondant sur les informations d'identification d'appareil définies dans les informations de gestion bibliographiques spécifiées par l'unité de génération de données de réponse, et où l'étape de génération de données de réponse consiste à vérifier la présence d'un fonctionnement normal en se fondant des résultats d'une vérification de fonctionnement réalisée par l'unité de vérification de fonctionnement et à générer les données de réponse de la liste de tâches en se fondant sur les données bibliographiques correspondant à une tâche stockée par l'appareil de commande qui peut obtenir une tâche auprès de l'appareil de traitement.

11. Procédé de commande selon la revendication 8, où
lorsqu'une demande d'obtention de tâche en provenance de l'appareil de traitement est acceptée lors de l'étape d'acceptation de demande, l'étape de traitement de tâche consiste à obtenir des données de tâche pertinentes auprès de l'unité de stockage de tâches contenue dans l'appareil de commande, en se fondant sur les informations d'emplacement de stockage reçues lorsque la demande d'obtention de tâche est acceptée, et l'étape de réponse à la demande (15) consiste à transmettre des données de tâche obtenues à l'appareil de traitement répondant ainsi à la demande d'obtention de tâche.

12. Procédé de commande selon la revendication 7, où
l'étape de génération de données de réponse consiste à générer les données de réponse de liste de tâches en se fondant sur les informations bibliographiques correspondant à une tâche accumulée détenue par un ou plusieurs appareils de commande prédéfinis parmi les appareils de commande comprenant l'appareil de commande et les autres appareils de commande.

13. Système de commande (1) comprenant :
un appareil de commande (100) parmi une pluralité d'appareils de commande, l'appareil de commande comprenant une unité de stockage de tâche qui accumule et stocke une tâche dans une zone de stockage prédéterminée, chacun de la pluralité d'appareils de commande étant connecté via un chemin de transmission de données prédéterminé avec un appareil de traitement (200) qui exécute la tâche stockée par l'unité de stockage de tâches, l'appareil de commande comprenant :
une unité d'acceptation de demande (14) qui accepte une demande de traitement de l'appareil de traitement ;
une unité de génération de données de réponse (16) qui génère des données de réponse à la demande de traitement en se fondant sur des résultats du traitement exécuté en réponse à la demande de traitement ; et
une unité de réponse à une demande (15) qui transmet les données de réponse à l'appareil de traitement et réponds à la demande de traitement acceptée, l'appareil de traitement comprenant :
une unité de demande qui demande un traitement prédéterminé par l'appareil de commande ; et une unité d'acceptation de réponse qui accepte une réponse à la demande de traitement provenant de l'appareil de commande,
**caractérisé en ce que**
dans l'appareil de traitement, l'unité de traitement émet une demande d'obtention de liste de tâches, et, dans l'appareil de commande (100), lorsque l'unité d'acceptation de demande (14) accepte une demande d'obtention de liste de tâches en provenance de l'appareil de traitement, l'unité de génération de données de réponse obtient des informations bibliographiques correspond à une tâche d'un utilisateur à partir d'une unité de stockage d'informations bibliographiques (80) qui stocke plusieurs ensembles d'informations bibliographiques afin de gérer unilatéralement les ensembles d'informations bibliographiques correspondant à toutes les tâches, y compris la tâche stockée par l'appareil de commande et des tâches stockées par d'autres appareils de commande parmi la pluralité d'appareils de commande, et, en se fondant sur les informations bibliographiques obtenues, génère des données de réponse de liste de tâches qui incluent une information spécifiant un emplacement d'accumulation de tâches pour spécifier un emplacement d'accumulation de tâches, et l'unité de réponse à la demande (15) transmet les données de réponse de liste de tâches générées à l'appareil de traitement et répond à la demande d'obtention de liste de tâches, l'appareil de commande comprenant en outre :
une unité d'analyse de tâche qui analyse une tâche reçue lorsqu'une demande d'accumulation de tâches est acceptée ; et une unité de gestion de tâches qui gère les données de la tâche accumulée en se fondant sur les résultats analysés, où
lorsque l'unité d'analyse de tâches obtient des résultats analysés incluant des données de tâche de la tâche reçue et des informations bibliographiques sur la tâche reçue, l'unité de gestion de tâches stocke dans l'unité de stockage d'informations bibliographiques (80) des informations de gestion bibliographiques dans lesquelles les informations bibliographiques sont collationnées avec des informations d'identification de tâche qui identifient la tâche reçue, et stocke, dans l'unité de stockage de tâche, des informations de gestion de tâche dans lesquelles sont collationnées les informations d'identification de tâche et les données de tâche, et
dans l'appareil de traitement, lorsque l'unité d'acceptation de réponse accepte une réponse à la demande d'obtention de liste de tâches en provenance de l'appareil de commande, un écran de liste de tâches d'un utilisateur est affiché en se fondant sur les données de réponse de liste de tâches reçues lorsque la réponse est acceptée.
